(19) **Europäisches Patentamt European Patent Office Office européen des brevets**

(11) **EP 3 988 327 B1**

(12) **EUROPEAN PATENT SPECIFICATION**

(45) Date of publication and mention of the grant of the patent:
**06.09.2023 Bulletin 2023/36**

(21) Application number: **21202815.3**

(22) Date of filing: **15.10.2021**

(51) International Patent Classification (IPC):
*B60C 1/00* (2006.01)   *C08C 19/02* (2006.01)
*C08C 19/22* (2006.01)   *C08C 19/25* (2006.01)
*C08F 236/06* (2006.01)   *C08L 15/00* (2006.01)

(52) Cooperative Patent Classification (CPC):
(C-Sets available)
**C08C 19/22; B60C 1/0016; C08C 19/02; C08C 19/25; C08F 236/06; C08L 15/00**     (Cont.)

(54) **CROSSLINKING RUBBER COMPOSITION, METHOD FOR PRODUCING CROSSLINKED RUBBER, AND TREAD FOR TIRE**

VERNETZENDE KAUTSCHUKZUSAMMENSETZUNG, VERFAHREN ZUR HERSTELLUNG VON VERNETZENDEM KAUTSCHUK UND LAUFFLÄCHE FÜR REIFEN

COMPOSITION DE CAOUTCHOUC RÉTICULABLE, PROCÉDÉ DE PRODUCTION D'UN CAOUTCHOUC RÉTICULABLE, ET BANDE DE ROULEMENT POUR PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.10.2020   JP 2020174807**
**24.08.2021   JP 2021136065**

(43) Date of publication of application:
**27.04.2022   Bulletin 2022/17**

(73) Proprietor: **Asahi Kasei Kabushiki Kaisha Tokyo 1000006 (JP)**

(72) Inventors:
• **ARAKI, Yoshifumi**
**Tokyo, 1000006 (JP)**
• **INOUE, Yoshihisa**
**Tokyo, 1000006 (JP)**
• **YASUMOTO, Atsushi**
**Tokyo, 1000006 (JP)**

(74) Representative: **Strehl Schübel-Hopf & Partner Maximilianstrasse 54 80538 München (DE)**

(56) References cited:
**EP-A1- 2 754 674     EP-A2- 1 149 867**

EP 3 988 327 B1

(52) Cooperative Patent Classification (CPC): (Cont.)

C-Sets
**C08F 236/06, C08F 212/08;**
**C08L 15/00, C08L 7/00, C08L 91/00, C08L 91/06,**
**C08K 3/36, C08K 3/04, C08K 5/548, C08K 5/09,**
**C08K 3/22, C08K 5/18, C08K 3/06, C08K 5/47,**
**C08K 5/16;**
**C08L 15/00, C08L 23/16, C08L 91/00, C08L 91/06,**
**C08K 3/36, C08K 3/04, C08K 5/548, C08K 5/09,**
**C08K 3/22, C08K 5/18, C08K 3/06, C08K 5/47,**
**C08K 5/16;**

**C08L 15/00, C08L 91/00, C08L 91/06, C08K 3/36,**
**C08K 3/04, C08K 5/548, C08K 5/09, C08K 3/22,**
**C08K 5/18, C08K 3/06, C08K 5/47, C08K 5/16**

**Description**

BACKGROUND OF THE INVENTION

Field of the Invention

The present invention relates to a crosslinking rubber composition, a method for producing a crosslinked rubber, and a tread for a tire.

Description of the Related Art

In recent years, in the fields of rubber materials for tire treads, sheets, films and asphalt modification, a crosslinking rubber composition containing a rubber polymer having an ethylene structure and containing a crosslinkable unsaturated group introduced therein has been proposed for purposes of increasing mechanical strength and permanent compression set (see, for example, International Publication No. WO2003/085010, Japanese Patent Laid-Open No. 2010-270314, International Publication Nos. WO2019/151126, WO2019/151127, and WO2019/078083).
The above-described conventionally proposed crosslinking rubber composition containing a rubber polymer having an ethylene structure and containing a crosslinkable unsaturated group has, however, the following problems: Since the amount of the crosslinkable unsaturated group is comparatively small, a crosslinking time of the crosslinking rubber composition is liable to long or a crosslink density in a crosslinked product is liable to be insufficient. As a result, there is a tendency that a tensile modulus is lowered, tear strength is lowered, and abrasion resistance is lowered.
Therefore, an object of the present invention is to provide a crosslinking rubber composition containing a rubber polymer having an ethylene structure and containing a crosslinkable unsaturated group with which a crosslinking time of the crosslinking rubber composition is less liable to be increased, and with which a crosslinked product excellent in a tensile modulus, tear strength and abrasion resistance can be obtained.
EP 2754674 A1 discloses a method for producing a modified conjugated diene-based polymer suitable for tire tread rubber compositions and discloses the use of a peroxide or sulfur as a vulcanization agent together with the modified conjugated diene-based polymer.
EP 1149867 A2 discloses a rubber composition comprising a non-crosslinked rubber component, sulfur and vulcanization promoters.

SUMMARY OF THE INVENTION

The present inventors have made earnest studies to solve the above-described problems of the conventional techniques, resulting in finding that a crosslinking rubber composition containing a rubber polymer in which an iodine value, an ethylene structure content and a vinyl aromatic block content are specified respectively to fall in prescribed numerical ranges can solve the above-described problems of the conventional techniques, and thus the present invention has been accomplished.
Specifically, the present invention is set out in the appended claims.
According to the present invention, a crosslinking rubber composition with which a crosslinking time is less liable to be increased, and with which a crosslinked product excellent in a tensile modulus, tear strength and abrasion resistance can be obtained.

DETAILED DESCRIPTION OF THE PREFERRED EMBODIMENT

Now, an embodiment for practicing the present invention (hereinafter referred to as the "present embodiment") will be described in detail.
It is noted that the following embodiment is merely illustrative for describing the present invention, and that the present invention is not limited to the following embodiment.

[Crosslinking Rubber Composition]

A crosslinking rubber composition of the present embodiment contains:

100 parts by mass of a rubber polymer (A) having an iodine value of 10 to 250 (g/100 g) and comprising 3% by mass or more of an ethylene structure and less than 10% by mass of a vinyl aromatic monomer block;
0.1 to 5.0 parts by mass of sulfur (B);
0.1 to 5.0 parts by mass of a radical generator (C); and

0.1 to 5.0 parts by mass of a vulcanization accelerator (D).

Owing to this configuration, a crosslinking rubber composition with which a crosslinking time is less liable to be increased, and with which a crosslinked product excellent in a tensile modulus, tear strength and abrasion resistance can be obtained.

(Rubber Polymer (A))

The rubber polymer (A) contained in the crosslinking rubber composition of the present embodiment has an iodine value of 10 to 250 (g/100 g) and comprises 3% by mass or more of an ethylene structure and less than 10% by mass of a vinyl aromatic monomer block.

<Iodine Value>

The iodine value of the rubber polymer (A) used in the crosslinking rubber composition of the present embodiment is 10 to 250 (g/100 g).
From the viewpoints of co-crosslinkability obtained in using the rubber polymer (A) in the crosslinking rubber composition and flexibility obtained in the form of a tire, the iodine value of the rubber polymer (A) is 10 (g/100 g) or more, preferably 15 (g/100 g) or more, more preferably 30 (g/100 g) or more, and further preferably 50 (g/100 g) or more.
On the other hand, from the viewpoint of mechanical strength and abrasion resistance obtained in use as a material of a tire, the iodine value needs to be 250 (g/100 g) or less, is preferably 200 (g/100 g) or less, more preferably 150 (g/100 g) or less, further preferably 100 (g/100 g) or less, and still further preferably 70 (g/100 g) or less.
The iodine value can be measured in accordance with a method described in "JIS K 0070:1992".
The iodine value is a value, in terms of the weight in grams of iodine, corresponding to an amount of halogen reacting with 100 g of a target substance, and hence the iodine value is expressed in the unit of "g/100 g".
For example, if a conjugated diene monomer and a vinyl aromatic monomer are copolymerized in a method for producing the rubber polymer described below, since a conjugated diene monomer unit has a double bond, the iodine value of the rubber polymer is lower when the content of a conjugated monomer unit is lower. Alternatively, if a conjugated diene monomer is hydrogenated in the production method, the iodine value is lower as a hydrogenation rate is higher.
The iodine value of the rubber polymer (A) can be controlled to fall in the above-described numerical range by adjusting an addition amount of a conjugated diene monomer or the like having an unsaturated bond, polymerization conditions such as a polymerization time and a polymerization temperature, and conditions employed in hydrogenation process such as a hydrogenation amount and a hydrogenation time.

<Ethylene Structure Content>

The rubber polymer (A) used in the crosslinking rubber composition of the present embodiment comprises 3% by mass or more of an ethylene structure content (ethylene structure ≥ 3% by mass).
When the ethylene structure in the rubber polymer (A) is 3% by mass or more, an effect that the tensile strength of the crosslinking rubber composition using the rubber polymer (A) is less liable to be lowered can be obtained. The ethylene structure in the rubber polymer (A) is preferably 5% by mass or more, more preferably 20% by mass or more, and further preferably 40% by mass or more.
As there are more ethylene structures in the rubber polymer (A), there is a tendency that the content of the sulfur (B) is preferably lower and the content of the radical generator (C) is preferably higher, but content ratios of the sulfur (B) and the radical generator (C) to the rubber polymer (A) can be adjusted within the above-described ranges.
The ethylene structure in the rubber polymer (A) is preferably 90% by mass or less, more preferably 80% by mass or less, further preferably 70% by mass or less, and still further preferably 60% by mass or less.
When the ethylene structure in the rubber polymer is 90% by mass or less, excellent rubber elasticity can be obtained.
An ethylene structure contained in the rubber polymer (A) encompasses all ethylene structures including an ethylene structure obtained by copolymerizing an ethylene monomer, and an ethylene structure obtained by polymerizing a conjugated diene monomer and then hydrogenating the resultant. For example, when a 1,4-butadiene unit is hydrogenated, two ethylene structures are obtained, and when a 1,4-isoprene unit is hydrogenated, one propylene structure and one ethylene structure are obtained.
The ethylene structure in the rubber polymer (A) can be measured by a method described in Examples below. The ethylene structure in the rubber polymer (A) can be controlled to fall in the above-described numerical range by adjusting an amount of ethylene added, an amount of a conjugated diene monomer added, a hydrogenation rate and the like.

<Vinyl Aromatic Monomer Block Content>

The rubber polymer (A) used in the crosslinking rubber composition of the present embodiment has a vinyl aromatic monomer block content of less than 10% by mass (vinyl aromatic monomer block < 10% by mass).

A vinyl aromatic monomer block refers to a block including a chain of eight or more vinyl aromatic monomer units.

When the vinyl aromatic monomer block content of the rubber polymer (A) is less than 10% by mass, fuel economy obtained when the crosslinking rubber composition of the present embodiment is used as a raw material of a tire tends to be easily improved.

The vinyl aromatic monomer block content of the rubber polymer (A) is preferably 7% by mass or less, more preferably 5% by mass or less, and further preferably 3% by mass or less.

From the viewpoint of flexibility of the vinyl aromatic monomer block, the number of blocks each including a chain of 30 or more vinyl aromatic monomer units is preferably small or zero.

The form of the vinyl aromatic monomer block can be specifically measured, for example, when the rubber polymer (A) is a butadiene-styrene copolymer, by decomposing the rubber polymer (A) by Kolthoff method (method described in I. M. KOLTHOFF, et al., J. Polym. Sci. 1, 429 (1946)) to analyze an amount of polystyrene insoluble in methanol. As another method, a known method, as described in International Publication No. WO2014/133097, such as measurement of a chain of styrene units by NMR can be employed for the analysis.

The vinyl aromatic monomer block content of the rubber polymer (A) can be controlled to fall in the above-described numerical range by adjusting a method for adding a vinyl aromatic monomer, or by adjusting addition of a polymerization aid, a polymerization temperature or the like.

<Content of Vinyl Aromatic Monomer Unit in Rubber Polymer (A)>

A content of the vinyl aromatic monomer unit in the rubber polymer (A) used in the crosslinking rubber composition of the present embodiment is preferably 5% by mass or more, more preferably 10% by mass or more, further preferably 15% by mass or more, and still further preferably 20% by mass or more from the viewpoints of resistance to deformation during transport of a molded article of the crosslinking rubber composition of the present embodiment, and break strength and wet skid resistance obtained when the crosslinking rubber composition of the present embodiment is used in a tire tread.

On the other hand, from the viewpoint of cuttability in measuring when the crosslinking rubber composition of the present embodiment is formed into a sheet-shaped or block-shaped molded article, from the viewpoint of adhesiveness of a packaging film formed from the crosslinking rubber composition of the present embodiment and break resistance of the packaging sheet, and from the viewpoint of fuel economy and abrasion resistance obtained when the crosslinking rubber composition of the present embodiment is used in a tire tread, the content of the vinyl aromatic monomer unit in the rubber polymer (A) is preferably 45% by mass or less, more preferably 30% by mass or less, and further preferably 25% by mass or less.

If a high modulus is required as in using the crosslinking rubber composition of the present embodiment as a material of a run flat tire member or the like, the content of the vinyl aromatic monomer unit in the rubber polymer (A) is preferably 30% by mass or more.

The content of the vinyl aromatic monomer unit in the rubber polymer (A) can be measured by a method described in Examples below.

The content of the vinyl aromatic monomer unit in the rubber polymer (A) can be controlled to fall in the above-described numerical range by adjusting the amount of a vinyl aromatic monomer added in polymerization process.

<Vinyl and Butylene Unit Content of Rubber Polymer (A)>

The rubber polymer (A) used in the crosslinking rubber composition of the present embodiment preferably has a vinyl and butylene unit content of 20% by mol or more.

The vinyl and butylene unit content of the rubber polymer (A) is preferably 20% by mol or more, more preferably 25% by mol or more, and further preferably 30% by mol or more from the viewpoints of productivity of the rubber polymer (A), processability of the crosslinking rubber composition of the present embodiment and wet skid resistance obtained when the crosslinking rubber composition of the present embodiment is used in a tire tread.

From the viewpoints of heat aging resistance of the rubber polymer (A) and fuel economy obtained when the crosslinking rubber composition of the present embodiment is used in a tire tread, the content is preferably 60% by mol or less, and more preferably 50% by mol or less.

The vinyl and butylene unit content of the rubber polymer (A) can be measured by $^1$H-NMR measurement described in Examples below.

The vinyl and butylene unit content of the rubber polymer (A) can be controlled to fall in the above-described numerical range by adjusting addition of a polar compound and a polymerization temperature employed in polymerization of the rubber polymer (A).

<Monomer Unit for Causing Unsaturated Group to be Contained in Rubber Polymer (A)>

The rubber polymer (A) used in the crosslinking rubber composition of the present embodiment preferably contains a monomer unit having an unsaturated group, such as a conjugated diene monomer unit or a myrcene, in a content of 2% by mass or more.

From the viewpoints of economic efficiency and productivity, the rubber polymer (A) more preferably contains a conjugated diene monomer unit.

When a conjugated diene monomer unit or a myrcene is contained as a component of the rubber polymer (A), the resultant rubber polymer (A) has a double bond, and hence becomes a crosslinkable unsaturated group.

The content of the monomer unit having an unsaturated group, such as a conjugated diene monomer unit or a myrcene, in the rubber polymer (A) is closely related to the iodine value described above.

When the content of the monomer unit having an unsaturated group, such as a conjugated diene monomer unit or a myrcene, is 2% by mass or more, the rubber polymer is excellent from the viewpoint of ease of crosslinking. The content of the monomer unit having an unsaturated group, such as a conjugated diene monomer unit or a myrcene, is more preferably 3% by mass or more, and further preferably 6% by mass or more.

The content of the monomer unit having an unsaturated group, such as a conjugated diene monomer unit or a myrcene, is preferably 50% by mass or less, more preferably 30% by mass or less, and further preferably 20% by mass or less. In this case, the rubber polymer is excellent in weather resistance and resistance to degradation over time.

Among monomer units having an unsaturated group such as a conjugated diene monomer unit or a myrcene, a conjugated diene monomer unit is preferred from the viewpoints of economic efficiency and productivity.

The content of the monomer unit having an unsaturated group, such as a conjugated diene monomer unit or a myrcene, in the rubber polymer (A) can be measured by a method described in Examples below, and can be controlled to fall in the above-described numerical range by adjusting an amount of a monomer having an unsaturated group such as a conjugated diene monomer unit or a myrcene to be added as described below in "Method for Producing Rubber Polymer (A)", and a hydrogenation rate of the conjugated diene monomer.

<Content of $\alpha$-Olefin in Rubber Polymer (A)>

A content of $\alpha$-olefin in all monomer units excluding the vinyl aromatic monomer unit in the rubber polymer (A) is preferably 13% by mass or more, more preferably 20% by mass or more, and further preferably 30% by mass or more from the viewpoint of productivity of the rubber polymer.

On the other hand, from the viewpoint of mechanical strength obtained when the crosslinking rubber composition of the present embodiment is used in a tire, the content of $\alpha$-olefin is preferably 70% by mass or less, more preferably 60% by mass or less, further preferably 55% by mass or less, and still further preferably 50% by mass or less.

When the rubber polymer (A) is produced by hydrogenating a polymer or a copolymer of a conjugated diene monomer, the content of $\alpha$-olefin can be controlled by adjusting a content of a conjugated diene monomer unit before hydrogenation, a vinyl bond content, and a hydrogenation rate.

It is noted that 1,2-vinyl butadiene is changed, through hydrogenation, into butylene to obtain an $\alpha$-olefin structure.

The content of $\alpha$-olefin in all the monomer units excluding the vinyl aromatic monomer unit in the rubber polymer (A) can be measured by $^1$H-NMR measurement described in Examples below.

<Modification of Rubber Polymer (A) contained in Crosslinking Rubber Composition>

In the crosslinking rubber composition of the present embodiment, the rubber polymer (A) preferably contains a nitrogen atom or a tin atom, and more preferably contains a nitrogen atom from the viewpoints of peeling resistance of the crosslinking rubber composition from a molded article of the crosslinking rubber composition, and fuel economy obtained in use in a tire.

When the rubber polymer (A) is modified with nitrogen, a modification ratio, measured by column adsorption GPC of the rubber polymer (A), is preferably 40% by mass or more, more preferably 60% by mass or more, and further preferably 70% by mass or more from the viewpoints of mechanical strength of the crosslinking rubber composition and dispersibility of silica or carbon black used in producing a tire containing silica or carbon black.

Herein, the term "modification ratio" refers to a mass ratio of a polymer having a nitrogen atom-containing functional group to the total amount of the rubber polymer (A).

A position where a nitrogen atom is introduced in the rubber polymer (A) used in the crosslinking rubber composition of the present embodiment may be any one of a polymerization starting end, a molecular chain (including a graft product), and a polymerization end of the rubber polymer (A).

The modification ratio can be controlled to fall in the above-described numerical range by adjusting an amount of a modifier added to the rubber polymer (A) and a modification process time.

When the rubber polymer (A) used in the crosslinking rubber composition of the present embodiment is a hydrogenated polymer obtained by polymerizing a conjugated diene monomer and hydrogenating the resultant, from the viewpoints of polymerization productivity, a high modification ratio, and abrasion resistance and fuel economy obtained in use as a material of a tire, it is preferable to employ a method for introducing a tin atom or a nitrogen atom into the rubber polymer (A) with a coupling agent containing a tin atom or a nitrogen atom. In particular, it is more preferable to employ a method for introducing a nitrogen atom into the rubber polymer (A) with a coupling agent containing a nitrogen atom.

From the viewpoints of polymerization productivity and a high modification ratio of the rubber polymer (A), preferable examples of a coupling agent containing a nitrogen atom include, but are not limited to, an isocyanate compound, an isothiocyanate compound, an isocyanuric acid derivative, a nitrogen group-containing carbonyl compound, a nitrogen group-containing vinyl compound, a nitrogen group-containing epoxy compound, and a nitrogen group-containing alkoxysilane compound.

Among these coupling agents containing a nitrogen atom, from the viewpoints of polymerization productivity and a high modification ratio of the rubber polymer (A) and tensile strength obtained in use as a material of a tire, a nitrogen group-containing alkoxysilane compound is more preferred.

Examples of the nitrogen group-containing alkoxysilane compound include, but are not limited to, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(5-trimethoxysilylpentyl)-1-aza-2-silacycloheptane, 2,2-dimethoxy-1-(3-dimethoxymethylsilylpropyl)-1-aza-2-silacyclopentane, 2,2-diethoxy-1-(3-diethoxyethylsilylpropyl)-1-aza-2-silacyclopentane, 2-methoxy-2-methyl-1-(3-trimethoxysilylpropyl)-1-aza-2-silacyclopentane, 2-ethoxy-2-ethyl-1-(3-triethoxysilylpropyl)-1-aza-2-silacyclopentane, 2-methoxy-2-methyl-1-(3-dimethoxymethylsilylpropyl)-1-aza-2-silacyclopentane, 2-ethoxy-2-ethyl-1-(3-diethoxyethylsilylpropyl)-1-aza-2-silacyclopentane, tris(3-trimethoxysilylpropyl)amine, tris(3-methyldimethoxysilylpropyl)amine, tris(3-triethoxysilylpropyl)amine, tris(3-methyldiethoxysilylpropyl)amine, tris(trimethoxysilylmethyl)amine, tris(2-trimethoxysilylethyl)amine, tris(4-trimethoxysilylbutyl)amine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, and $N^1$-(3-(bis(3-(trimethoxysilyl)propyl)amino)propyl)-$N^1$-methyl-$N^3$-(3-(methyl(3-(trimethoxysilyl)propyl)amino)propyl)-$N^3$-(3-(trimethoxysilyl)propyl)-1,3-propanediamine.

When the rubber polymer (A) used in the crosslinking rubber composition of the present embodiment is produced by copolymerizing ethylene and a conjugated diene monomer, the rubber polymer (A) preferably contains a tin atom, a nitrogen atom, or a silicon atom from the viewpoints of break strength of the crosslinking rubber composition of the present embodiment, and fuel economy, abrasion resistance and flexibility obtained in use as a material of a tire.

From the viewpoint of productivity of the rubber polymer (A), it is preferable to employ a method in which a tin atom, a nitrogen atom or a silicon atom is introduced into the rubber polymer (A) with a coupling agent containing such an atom when a conversion rate in the polymerization reaction reaches 100%.

Examples of the coupling agent containing a tin atom, a nitrogen atom, or a silicon atom include, but are not limited to, a tin-containing compound such as bis(maleic acid-1-octadecyl)dioctyltin, an isocyanate compound such as 4,4-diphenylmethane diisocyanate, and an alkoxysilane compound such as glycidylpropyltrimethoxysilane.

<Glass Transition Temperature of Rubber Polymer (A)>

A glass transition temperature of the rubber polymer (A) used in the crosslinking rubber composition of the present embodiment is preferably -90°C or more, more preferably -80°C or more, and further preferably -75°C or more from the viewpoint of tensile strength of the crosslinking rubber composition of the present embodiment.

On the other hand, from the viewpoints of flexibility of the crosslinking rubber composition of the present embodiment and cut resistance of a sheet obtained in producing a tire, the glass transition temperature is preferably -15°C or less, more preferably -30°C or less, and further preferably -40°C or less.

With respect to the glass transition temperature, a peak top (an inflection point) of a DSC differential curve obtained by recording a DSC curve during temperature increase in a prescribed temperature range in accordance with ISO 22768: 2006 is obtained, and a temperature of the peak top is determined as the glass transition temperature.

<Weight Average Molecular Weight of Rubber Polymer (A)>

A weight average molecular weight of the rubber polymer (A) used in the crosslinking rubber composition of the present embodiment is preferably 100,000 or more, more preferably 150,000 or more, further preferably 200,000 or more, and still further preferably 250,000 or more from the viewpoints of compatibility of the crosslinking rubber composition of the present embodiment, and tensile elongation of the crosslinking rubber composition.

On the other hand, from the viewpoint of processability of the crosslinking rubber composition, the weight average molecular weight is preferably 1,000,000 or less, more preferably 700,000 or less, further preferably 600,000 or less, and still further preferably 500,000 or less.

From the viewpoints of compatibility of the crosslinking rubber composition and fuel economy obtained in use as a material of a tire, a molecular weight distribution (= weight average molecular weight/number average molecular weight) of the rubber polymer (A) used in the crosslinking rubber composition of the present embodiment is preferably 2.0 or less, more preferably 1.8 or less, and further preferably 1.6 or less. On the other hand, from the viewpoint of processability of the crosslinking rubber composition, the molecular weight distribution is preferably 1.05 or more, more preferably 1.2 or more, and further preferably 1.4 or more.

The weight average molecular weight and the molecular weight distribution of the rubber polymer (A) can be calculated based on a molecular weight in terms of polystyrene measured by GPC (gel permeation chromatography).

The weight average molecular weight and the molecular weight distribution of the rubber polymer (A) can be controlled to fall in the above-described ranges by adjusting various polymerization conditions employed in the polymerization process such as an amount of a monomer added, a polymerization time, a polymerization temperature, and a polymerization pressure.

The rubber polymer (A) used in the crosslinking rubber composition of the present embodiment may contain two or more polymer blocks respectively having different composition ratios among a vinyl aromatic monomer unit, ethylene, $\alpha$-olefin and a conjugated diene monomer unit from the viewpoints of compatibility of the crosslinking rubber composition, and flexibility over a wide range from a low temperature to a high temperature. Each of the polymer blocks may be a copolymer block containing a plurality types of monomer units. From the viewpoint of flexibility, the content of the vinyl aromatic monomer unit in each polymer block is preferably 60% by mass or less, more preferably 50% by mass or less, and further preferably 40% by mass or less.

(Method for Producing Rubber Polymer (A))

As a method for producing the rubber polymer (A) used in the crosslinking rubber composition of the present embodiment, a production method in which at least a conjugated diene monomer is polymerized or copolymerized, and some or most of double bonds are then hydrogenated, or a production method in which at least ethylene and a conjugated diene monomer are copolymerized is employed.

As the method in which at least a conjugated diene monomer is polymerized or copolymerized and the resultant is hydrogenated, as described in, for example, International Publication No. WO96/05250, Japanese Patent Laid-Open No. 2000-053706, and International Publication Nos. WO2003/085010, WO2019/151126, WO2019/151127, WO2002/002663 and WO2015/006179, a conjugated diene monomer is polymerized by anionic polymerization under known conditions with various additives added, and the resultant is copolymerized with another monomer if necessary, and then hydrogenated.

As the method in which at least ethylene and a conjugated diene monomer are copolymerized, as described in, for example, International Publication Nos. WO2019/078083, WO2019/171679 and WO2019/142501, ethylene and a conjugated diene monomer are copolymerized, with another monomer added if necessary, by coordination polymerization using various additives under various conditions.

From the viewpoint of increasing the degree of freedom in the structure of the polymer, the rubber polymer (A) is preferably produced by polymerizing a conjugating diene monomer and then hydrogenating the resultant.

Examples of the conjugated diene monomer include, but are not limited to, 1,3-butadiene, isoprene, 2,3-dimethyl-1,3-butadiene, 1,3-pentadiene, 3-methyl-1,3-pentadiene, 1,3-hexadiene, and 1,3-heptadiene.

Among these, from the viewpoint of industrial availability, 1,3-butadiene and isoprene are preferred, and 1,3-butadiene is more preferred.

One of these may be singly used, or two or more of these may be used together.

The rubber polymer (A) can use, as a polymerizable monomer, a vinyl aromatic monomer in addition to the above-described diene monomer.

Examples of the vinyl aromatic monomer include, but are not limited to, styrene, p-methylstyrene, $\alpha$-methylstyrene, vinyl ethyl benzene, vinyl xylene, vinyl naphthalene, diphenylethylene, vinyl benzyl dimethylamine, (4-vinylbenzyl)dimethyl aminoethyl ether, N,N-dimethylaminoethyl styrene, N,N-dimethylaminomethyl styrene, and tertiary amino group-containing diphenylethylene (such as 1-(4-N,N-dimethylaminophenyl)-1-phenylethylene).

Among these, from the viewpoint of industrial availability, styrene is preferred.

One of these may be singly used, or two or more of these may be used together.

The rubber polymer (A) may use, as a polymerizable monomer, another monomer if necessary in addition to the above-described monomers.

Examples of the additional monomer include, but are not limited to, unsaturated carboxylic acid ester, unsaturated carboxylic acid, an α,β-unsaturated nitrile compound, α-olefin (such as butylene, propylene, pentene, or hexene), ethylene, myrcene, ethylidene norbornene, isopropylidene norbornene, cyclopentadiene, and divinylbenzene.

When the rubber polymer (A) used in the crosslinking rubber composition of the present embodiment is produced by polymerizing a conjugated diene monomer, or copolymerizing a conjugated diene monomer with another monomer if necessary, and hydrogenating the resultant, a vinyl bond content of a conjugated diene monomer unit of a conjugated diene-based polymer before hydrogenation is significant from the viewpoint of obtaining excellent properties. From the viewpoints of productivity of the rubber polymer (A) and high wet skid resistance obtained in the form of a tire, the vinyl bond content is preferably 10% by mol or more, and more preferably 20% by mol or more. From the viewpoint of mechanical strength obtained when the crosslinking rubber composition of the present embodiment is used as a material of a tire, the vinyl bond content is preferably 75% by mol or less, more preferably 60% by mol or less, further preferably 45% by mol or less, and still further preferably 30% by mol or less.

The polymerization process and the hydrogenation process can be performed respectively by either a batch method or a continuous method.

Intermolecular and intramolecular distributions in the rubber polymer (A) of the hydrogenation rate, the ethylene, and monomer units of the monomers such as a conjugated diene monomer, a myrcene, an α-olefin, and a vinyl aromatic monomer are not especially limited but these may be uniformly present, non-uniformly present, or present with a distribution.

(Addition of Additive to Rubber Polymer (A))

In the production of the rubber polymer (A) used in the crosslinking rubber composition of the present embodiment, various additives are preferably added.

<Rubber Softener>

An example of the additives includes a rubber softener. In order to improve productivity of the rubber polymer (A) and processability obtained in blending an inorganic filler or the like in production of a tire, the rubber softener is added preferably in an amount of 1 to 30% by mass based on all materials.

If the rubber polymer (A) has a high molecular weight, for example, if the weight average molecular weight exceeds 1,000,000, the rubber softener is used preferably in an amount of 15 to 30% by mass. On the other hand, in order to increase the degree of freedom in composition in obtaining a rubber composition containing a filler, the rubber softener is used preferably in an amount of 1 to 15% by mass.

The content of the rubber softener in the rubber composition containing the rubber polymer (A) is more preferably 20% by mass or less, further preferably 10% by mass or less, and still further preferably 5% by mass or less from the viewpoint of inhibiting degradation over time caused in use as a material of a tire.

The rubber softener is not especially limited, and examples include an extender oil, a liquid rubber, and a resin.

From the viewpoints of processability, productivity, and economic efficiency, the rubber softener is preferably an extender oil.

As a method for adding the rubber softener to the rubber polymer (A), although not limited to the following, a method in which the rubber softener is added to be mixed with a polymer solution, and the thus obtained polymer solution containing the rubber softener is desolvated is preferably employed.

Preferable examples of the extender oil used as the rubber softener include an aromatic oil, a naphthenic oil, and a paraffin oil.

Among these, from the viewpoint of environmental safety, and from the viewpoints of oil bleed prevention and wet grip characteristics, an aroma substitute oil containing 3% by mass or less of a polycyclic aromatic (PCA) component in accordance with the IP 346 method is preferred. Examples of the aroma substitute oil include TDAE (Treated Distillate Aromatic Extracts) and MES (Mild Extraction Solvate) described in Kautschuk Gummi Kunststoffe 52 (12) 799 (1999), and RAE (Residual Aromatic Extracts).

<Rubber Stabilizer>

Another example of the additives includes a rubber stabilizer.

The rubber stabilizer is preferably added after the polymerization process of the rubber polymer (A) from the viewpoints of prevention of gel formation and processing stability.

As the rubber stabilizer, any of known stabilizers can be used, and examples include, but are not limited to, antioxidants such as 2,6-di-tert-butyl-4-hydroxytoluene (hereinafter sometimes referred to as "BHT"), n-octadecyl-3-(4'-hydroxy-3',5'-di-tertbutylphenol)propionate, and 2-methyl-4,6-bis[(octylthio)methyl]phenol.

(Physical Properties of Rubber Polymer (A))

<Residual Amount of Solvent>

A residual amount of the solvent, in the rubber polymer (A) used in the crosslinking rubber composition of the present embodiment or a rubber composition obtained by adding various additives to the rubber polymer (A), of a polymerization solvent used in the polymerization process of the rubber polymer (A) is preferably smaller from the viewpoint of an odor and VOC reduction. The residual amount of the solvent is preferably 5,000 ppm or less, more preferably 3,000 ppm or less, and further preferably 1,500 ppm or less. From the viewpoint of balance with economic efficiency, the residual amount is preferably 50 ppm or more, more preferably 150 ppm or more, and further preferably 300 ppm or more.

<Water Content>

A water content of the rubber polymer (A) used in the crosslinking rubber composition of the present embodiment or in a rubber composition obtained by adding various additives to the rubber polymer (A) is preferably 0.05% by mass or more and 1.5% by mass or less. The water content of the rubber polymer (A) or of the rubber composition is preferably 0.05% by mass or more, more preferably 0.1% by mass or more, and further preferably 0.2% by mass or more from the viewpoint of inhibiting gel formation in drying after solvent removal. On the other hand, from the viewpoints of prevention of condensation and discoloration resistance, the water content is preferably 1.5% by mass or less, more preferably 1.0% by mass or less, and further preferably 0.8% by mass or less.

<Mooney Viscosity>

A Mooney viscosity of the rubber polymer (A) used in the crosslinking rubber composition of the present embodiment or a rubber composition obtained by adding various additives to the rubber polymer (A) can be an index including information of the rubber polymer (A), such as the molecular weight, the molecular weight distribution, the branch number, the content of a softener, the residual amount of a solvent, and the water content.
The Mooney viscosity measured at 100°C of the rubber polymer (A) or the rubber composition obtained by adding various additives to the rubber polymer (A) is preferably 40 or more, more preferably 50 or more, and further preferably 55 or more from the viewpoints of abrasion resistance of the crosslinking rubber composition of the present embodiment, and steering stability and break strength obtained in use as a material of a tire. On the other hand, from the viewpoints of productivity of the rubber polymer (A) or the rubber composition, and processability of the rubber composition containing a filler or the like blended, the Mooney viscosity is preferably 170 or less, more preferably 150 or less, further preferably 130 or less, and still further preferably 110 or less.
The Mooney viscosity can be measured by a method prescribed in ISO 289.

<Mooney Stress Relaxation Rate>

A Mooney stress relaxation rate of the rubber polymer (A) or a rubber composition using the rubber polymer (A) measured at 100°C is preferably 0.80 or less, more preferably 0.7 or less, and further preferably 0.6 or less from the viewpoint of moldability.
A Mooney stress relaxation rate can be an index of entanglement among molecules in a conjugated diene-based polymer, and a lower Mooney stress relaxation rate means that molecules more largely entangle with one another. The Mooney stress relaxation rate can be lowered by increasing the molecular weight of the rubber polymer (A), increasing a branch number with the above-described coupling agent, a prescribed branching agent or the like, or increasing the Mooney viscosity by reducing the amount of a rubber softener added.
The Mooney stress relaxation rate can be obtained as follows: The rubber polymer (A) or the rubber composition using the rubber polymer (A) is preheated at 100°C for 1 minute, and then, a rotor is rotated at 2 rpm for measuring a Mooney viscosity ($ML_{(1+4)}$) based on a torque obtained after 4 minutes. Thereafter, the rotation of the rotor is immediately stopped, a torque is recorded, in Mooney unit, every 0.1 second for 1.6 to 5 seconds after stopping the rotor, and in a double logarithmic plot of the torque and the time (in sec), a slope of a line is obtained, and an absolute value of the slope is determined as the Mooney stress relaxation rate.

(Method for Molding Rubber Polymer (A) or Rubber Composition)

The rubber polymer (A) used in the crosslinking rubber composition of the present embodiment, or a rubber composition containing the rubber polymer (A) is preferably obtained as a molded article molded in the shape of a sheet or a block from the viewpoint of handleability. The molded article is more preferably in the shape of a block, further preferably in the shape of a block (bale) of 1,000 cm$^3$ or more, and still further preferably in the shape of a rectangular parallelepiped bale of 17.5 kg to 35 kg.

(Components of Crosslinking Rubber Composition)

The crosslinking rubber composition of the present embodiment contains the sulfur (B), the radical generator (C), and the vulcanization accelerator (D) from the viewpoint of high mechanical strength and the like.
The crosslinking rubber composition of the present embodiment can be subjected to crosslinking process to be formed into a crosslinked product, and can be used in various applications.
The crosslinking rubber composition of the present embodiment contains at least the rubber polymer (A) or a rubber composition obtained by adding various additives to the rubber polymer (A), and can further contain an additional rubber component, a filler, a crosslinking agent and the like if necessary.

<Additional Rubber Component>

The additional rubber component is not especially limited, and can be appropriately selected depending on purposes. Examples include a styrene-butadiene rubber (of emulsion polymerization type or solution polymerization type), a natural rubber, polyisoprene, a butadiene rubber (high cis polybutadiene, low cis polybutadiene, syndiotactic 1,2-polybutadiene, or an acrylonitrile-butadiene rubber (NBR)), a chloroprene rubber, an ethylene-α-olefin copolymer rubber such as an ethylene-propylene rubber, an ethylene-butene rubber, or ethylene-octene, an ethylene-propylene-diene rubber (EPDM), a butyl rubber, a polysulfide rubber, a silicone rubber, a fluororubber, and a urethane rubber.
One of these may be singly used, or a mixture of two or more of these may be used.
For mixing the additional rubber component to the rubber polymer (A), the rubber component may be mixed with the rubber polymer (A) in a dry state after the polymerization process of the rubber polymer (A), or may be mixed with the rubber polymer (A) in a solution state during the polymerization process.
Among the above-described examples, from the viewpoints of the tensile modulus, tear strength and flexibility of the crosslinking rubber composition, the additional rubber component is preferably an ethylene-based copolymer, and is more preferably an ethylene-α-olefin copolymer rubber such as an ethylene-propylene rubber (EPM), or an ethylene-propylene-diene rubber (EPDM).

<Content of Rubber Polymer (A) in Entire Rubber Component>

A content of the rubber polymer (A) based on an entire amount of the rubber component in the crosslinking rubber composition of the present embodiment is preferably 20% by mass or more, more preferably 40% by mass or more, further preferably 60% by mass or more, and still further preferably 80% by mass or more.

<Average Iodine Value of Entire Rubber Component>

An average iodine value of the entire rubber component in the crosslinking rubber composition of the present embodiment is preferably 250 (g/100 g) or less from the viewpoints of inhibiting uneven crosslinking and obtaining high mechanical strength. The average iodine value is more preferably 200 (g/100 g) or less, further preferably 130 (g/100 g) or less, and still further preferably 70 (g/100 g) or less.
The average iodine value of the rubber component can be measured in accordance with a method described in "JIS K 0070:1992". For obtaining the average iodine value of the entire rubber component, an iodine value is measured in a polymer state before obtaining the crosslinking rubber composition, and the average iodine value is calculated in accordance with the content of the polymer in the crosslinking rubber composition.
The iodine value is a value, in terms of the weight in grams of iodine, corresponding to an amount of halogen reacting with 100 g of a target substance, and hence the iodine value is expressed in the unit of "g/100 g".
The iodine value of the entire rubber component can be controlled to fall in the above-described numerical range by adjusting an unsaturated bond content of a polymer contained in the rubber component of the crosslinking rubber composition, polymerization conditions for the polymer, a hydrogenation amount and the like.

<Sulfur (B)>

The crosslinking rubber composition of the present embodiment contains the sulfur (B) and the radical generator (C) from the viewpoints of making a crosslinking time less liable to increase and obtaining an excellent tensile modulus and tear strength in a crosslinked product.

The sulfur (B) is sulfur, sulfur monochloride or sulfur dichloride. Among these, sulfur is preferably used from the viewpoint that the crosslinking rubber composition of the present embodiment can be excellent in fatigue resistance over time.

A content of the sulfur (B) in the crosslinking rubber composition of the present embodiment is 0.1 parts by mass or more and 5.0 parts by mass or less based on 100 parts by mass of the rubber polymer (A) from the viewpoint of obtaining an excellent tensile modulus in a crosslinked product. From the same viewpoint, the content is preferably 0.5 parts by mass or more, and more preferably 1.0 part by mass or more. On the other hand, from the viewpoints of inhibiting uneven crosslinking and obtaining excellent tear strength, the content is 5.0 parts by mass or less, preferably 4.0 parts by mass or less, more preferably 3.0 parts by mass or less, and further preferably 2.0 parts by mass or less.

In the crosslinking rubber composition of the present embodiment, the sulfur (B) and the radical generator (C) are used together on the assumption that a crosslinking reaction is difficult to occur because the rubber polymer (A) contains a small amount of unsaturated groups. Therefore, strictly speaking, it may be preferable to set amounts of the sulfur (B) and the radical generator (C) to be added in accordance with the amount of the rubber polymer (A). Practically, however, the amount of the rubber polymer (A) included in the entire rubber component contained in the crosslinking rubber composition is set to a prescribed amount or more (namely, not set to an extremely small amount) in consideration of influence of the rubber polymer (A) on performances of the crosslinking rubber composition. Therefore, even when the amounts of the sulfur (B) and the radical generator (C) are set based on the amount of the entire rubber component, the performances of the crosslinking rubber composition of the present embodiment are less affected.

As the sulfur (B), one of the above-described examples may be singly used, or two or more of these may be used together.

<Radical Generator (C)>

The crosslinking rubber composition of the present embodiment contains the radical generator (C).

The radical generator (C) generates a peroxy radical in the presence of a heat- or oxidation-reduction system, and from the viewpoints of tensile energy of the crosslinking rubber composition and compression set resistance, is preferably an organic peroxide or an azo compound, and more preferably an organic peroxide.

An organic peroxide attacks, as the radical generator (C), a double bond contained in an unsaturated group of the rubber polymer (A) to form a crosslinking. Since a crosslinking reaction is slow and a crosslink density is liable to be insufficient when crosslinking is caused by the sulfur (B) alone, the crosslink density of the whole can be expected to be complemented by the crosslinking caused by the radical generator (C) having a different mechanism. Therefore, any compound capable of generating a radical can be used as the radical generator (C) .

Examples of the organic peroxide include, but are not limited to, dicumyl peroxide, 1,1-bis(t-butylperoxy)cyclohexane, 1,1-bis(t-butylperoxy)-3,5,5-trimethylcyclohexane, 2,5-dimethyl-2,5-di(t-butylperoxy)hexane, t-butylhydroperoxide, 2,5-dimethylhexane-2,5-dihydroperoxide, di-t-butylperoxide, t-butylcumylperoxide, a,a'-bis(t-butylperoxy)-p-diisopropylbenzene, 2,5-dimethyl-2,5-bis(t-butylperoxy)-3-hexyne, benzoyl peroxide, t-butylperoxybenzoate, 2,5-dimethyl-2,5-di(benzoylperoxy)hexane, t-butylperoxymaleic acid, and t-butylperoxyisopropylcarbonate. In particular, dicumyl peroxide, 1,1-bis(t-butylperoxy)cyclohexane, 1,1-bis(t-butylperoxy)-3,5,5-trimethylcyclohexane, 2,5-dimethyl-2,5-di(t-butylperoxy)hexane, 2,5-dimethyl-2,5-bis(t-butylperoxy)-3-hexyne, and t-butyl peroxide are preferred.

One of these organic peroxides may be singly used, or two or more of these may be used together.

Examples of the azo compound include, but are not limited to, 2,2'-azobisisobutyronitrile (AIBN), 2,2'-azobis-2-methylbutyronitrile (AMBN), 2,2'-azobis-2,4-dimethylvaleronitrile (ADVN), and 2,2'-azobis-4-azobiscyanovaleric acid (salt) (ACVA). One of these azo compounds may be singly used, or two or more of these may be used together.

A content of the radical generator (C) in the crosslinking rubber composition of the present embodiment is 0.1 parts by mass or more and 5.0 parts by mass based on 100 parts by mass of the rubber polymer (A) contained in the crosslinking rubber composition from the viewpoint of reducing a crosslinking time of the crosslinking rubber composition and from the viewpoints of a tensile modulus and tear strength. The content is preferably 0.4 parts by mass or more, and more preferably 1.0 part by mass or more. On the other hand, from the viewpoints of inhibition of uneven crosslinking and flexibility, the content is 5.0 parts by mass or less, and preferably 4.0 parts by mass or less, more preferably 3.0 parts by mass or less, and further preferably 2.0 parts by mass or less.

From the viewpoints of releasability of a vulcanizate of the crosslinking rubber composition of the present embodiment and hardness of the crosslinking rubber composition, the content of the sulfur (B) and the content of the radical generator (C) are preferably in a relationship of "the content of the sulfur (B) > the content of the radical generator (C)", and more preferably in a relationship of "the content of the sulfur (B)/the content of the radical generator (C) > 1.67", and further preferably in a relationship of "the content of the sulfur (B)/the content of the radical generator (C) > 1.95".

Furthermore, from the viewpoint of sufficiently crosslinking the crosslinking rubber composition of the present embodiment to improve a tensile modulus, tear strength and abrasion resistance, the content of the radical generator (C) and the content of the vinyl aromatic monomer unit in the rubber polymer (A) are preferably in a relationship of "the content of the radical generator (C)/the content of the vinyl aromatic monomer unit in the rubber polymer (A) $\geq$ 0.026". "The content of the radical generator (C)/the content of the vinyl aromatic monomer unit in the rubber polymer (A)" is more preferably 0.035 or more, further preferably 0.08 or more, and still further preferably 0.105 or more.

When the content of the vinyl aromatic monomer unit in the rubber polymer (A) is high, the content of the crosslinkable unsaturated group in the rubber polymer (A) is reduced, but sufficient crosslinking can be performed by adding a large amount of the radical generator (C). On the other hand, when the content of the vinyl aromatic monomer unit in the rubber polymer (A) is low, the content of the crosslinkable unsaturated group is high, and hence sufficient crosslinking can be performed even though the radical generator (C) is not added in a large amount.

Accordingly, in the present invention, the content of the radical generator (C) and the content of the vinyl aromatic monomer unit in the rubber polymer (A) were earnestly studied, resulting in obtaining the above-described relationship.

When the rubber polymer (A) does not contain a vinyl aromatic monomer unit, the denominator of the "content of the radical generator (C)/the content of the vinyl aromatic monomer unit in the rubber polymer (A)" is zero, and therefore, this relationship holds only when the rubber polymer (A) contains the vinyl aromatic monomer unit (namely, the content of the vinyl aromatic monomer unit is not zero).

<Vulcanization Accelerator (D)>

The crosslinking rubber composition of the present embodiment contains the vulcanization accelerator (D).

From the viewpoints of a short crosslinking time of the crosslinking rubber composition and abrasion resistance, preferable examples of the vulcanization accelerator (D) include guanidine-based, aldehyde-amine-based, aldehyde-ammonia-based, thiazole-based, sulfenamide-based, thiourea-based, thiuram-based, dithiocarbamate-based, and xanthate-based compounds.

In particular, a guanidine-based vulcanization accelerator such as diphenylguanidine, and a thiazole-based vulcanization accelerator such as 2-mercaptobenzothiazole, dibenzothiazyl disulfide, N-cyclohexyl-2-benzothiazylsulfenamide, or N-t-butyl-2-benzothiazolylsulfenamide are more preferred.

One of these vulcanization accelerators (D) may be singly used, or two or more of these may be used together.

A content of the vulcanization accelerator (D) in the crosslinking rubber composition of the present embodiment is, from the viewpoint of a high crosslink density, 0.1 parts by mass or more based on 100 parts by mass of the rubber polymer (A) contained in the crosslinking rubber composition, is preferably 0.7 parts by mass or more, and more preferably 1.2 parts by mass or more.

On the other hand, from the viewpoint of flexibility of the crosslinking rubber composition, the content is 5 parts by mass or less, preferably 3 parts by mass or less, and more preferably 2 parts by mass or less.

In the crosslinking rubber composition of the present embodiment, from the viewpoints of a short crosslinking time and hardness of the crosslinking rubber composition, there preferably is a relationship of "(the content of the sulfur (B) + the content of the radical generator (C))" $\times$ 0.5 < "the content of the vulcanization accelerator (D)".

It is more preferable that there is a relationship of "(the content of the sulfur (B) + the content of the radical generator (C))" $\times$ 0.65 < "the content of the vulcanization accelerator (D)", and further preferable that there is a relationship of "(the content of the sulfur (B) + the content of the radical generator (C))" $\times$ 0.8 < "the content of the vulcanization accelerator (D)".

<Polyfunctional Crosslinking Aid (E)>

The crosslinking rubber composition of the present embodiment preferably contains a polyfunctional crosslinking aid (E).

From the viewpoints of uniform crosslinkability and a short crosslinking time of the crosslinking rubber composition of the present embodiment, the polyfunctional crosslinking aid (E) is a compound containing two or more radically reactive unsaturated groups.

Preferable examples of the polyfunctional crosslinking aid (E) include, but are not limited to, a polyfunctional vinyl monomer such as divinylbenzene or triallylisocyanurate, and a polyfunctional methacrylate monomer such as ethylene glycol dimethacrylate, diethylene glycol dimethacrylate, triethylene glycol dimethacrylate, polyethylene glycol dimethacrylate, trimethylolpropane trimethacrylate, or allyl methacrylate. In particular, triallylisocyanurate and triethylene glycol dimethacrylate are preferred.

A content of the polyfunctional crosslinking aid (E) is, from the viewpoint of uniform crosslinkability of the crosslinking rubber composition of the present embodiment, preferably 0.3 parts by mass or more, and more preferably 0.5 parts by mass or more based on 100 parts by mass of the rubber component contained in the crosslinking rubber composition, and is further preferably equal to or higher than the content of the radical generator (C), and still further preferably 1.5 times or more as high as the content of the radical generator (C). On the other hand, from the viewpoint of inhibiting uneven crosslinking, the content is 3.0 parts by mass or less based on 100 parts by mass of the rubber component contained in the crosslinking rubber composition.

<Resin>

The crosslinking rubber composition of the present embodiment preferably contains 3 to 40 parts by mass of a resin based on 100 parts by mass of the rubber component contained in the crosslinking rubber composition from the viewpoint of well gathering a material discharged from a kneader, and from the viewpoint of sheet moldability, and shape stability of an extruded product in extrusion process.

It is noted that the rubber polymer (A) and the additional rubber component described above are not embraced in the resin.

A content of the resin is more preferably 5 parts by mass or more, and further preferably 10 parts by mass or more from the viewpoint of tensile energy.

On the other hand, from the viewpoint of ease of mixing the crosslinking rubber composition, the content is more preferably 30 parts by mass or less, and further preferably 25 parts by mass or less.

The resin contained in the crosslinking rubber composition is preferably a compound that is a solid at room temperature (23°C), and contains carbon and hydrogen as principal components. It is noted that the resin may contain another atom in addition to carbon and hydrogen.

Examples of the resin include aliphatic/aromatic resins using aliphatic, alicyclic, aromatic, hydrogenated aromatic, and aliphatic and/or aromatic monomers.

The resin may be a petroleum-based resin, or a natural or synthetic resin excluding a petroleum-based resin.

An example of the resin includes, but is not limited to, a resin selected from the group consisting of a homopolymer or copolymer resin of cyclopentadiene (CPD), a homopolymer or copolymer resin of dicyclopentadiene (DCPD), a homopolymer or copolymer resin of terpene, a homopolymer or copolymer resin of a C5 fraction, a homopolymer or copolymer resin of a C9 fraction, a homopolymer or copolymer resin of α-methylstyrene, and a mixture of any of these resins.

In particular, among the copolymer resins described above, a copolymer selected from the group consisting of a (D)CPD/vinyl aromatic copolymer resin, a (D)CPD/terpene copolymer resin, a terpene/phenol copolymer resin, a (D)CPD/C5 fraction copolymer resin, a (D)CPD/C9 fraction copolymer resin, a terpene/vinyl aromatic copolymer resin, a terpene/phenol copolymer resin, a C5 fraction/vinyl aromatic copolymer resin, and a mixture of these resins is preferred.

One of these resins may be singly used, or two or more of these may be used together.

The resin has a glass transition temperature of preferably 30°C or more, and more preferably 40°C or more from the viewpoints of tensile strength and tensile elongation of the crosslinking rubber composition of the present embodiment.

On the other hand, from the viewpoint of ease of mixing the crosslinking rubber composition of the present embodiment, the glass transition temperature of the resin is preferably 100°C or less, and more preferably 80°C or less.

<Filler>

The crosslinking rubber composition of the present embodiment preferably contains a filler from the viewpoint of improvement of a reinforcing property.

A content of the filler can be appropriately selected depending on purposes, and is preferably 10 to 130 parts by mass, more preferably 30 to 90 parts by mass, and further preferably 40 to 85 parts by mass based on 100 parts by mass of the rubber component.

It is noted that the "rubber component" embraces the rubber polymer (A) and the additional rubber component.

When the content of the filler is 10 parts by mass or more, the effect of improving the reinforcing property resulting from blending the filler can be obtained, and when the content is 130 parts by mass or less, good workability can be retained with large deterioration of fuel economy avoided in use as a material of a tire.

Examples of the filler include, but are not limited to, carbon black, silica, aluminum hydroxide, clay, alumina, talc, mica, kaolin, glass balloon, glass bead, calcium carbonate, magnesium carbonate, magnesium hydroxide, magnesium oxide, titanium oxide, potassium titanate, and barium sulfate. Among these, carbon black is preferably used.

One of these may be singly used, or two or more of these may be used together.

The carbon black is not especially limited, and can be appropriately selected depending on purposes, and examples include FEF, GPF, SRF, HAF, N339, IISAF, ISAF, and SAF. One of these may be singly used, or two or more of these may be used together.

A nitrogen adsorption specific surface area ($N_2SA$, measured in accordance with JIS K6217-2: 2001) of the carbon black is not especially limited, and can be appropriately selected depending on purposes.

Among these fillers, from the viewpoints of fuel economy obtained when the crosslinking rubber composition is used as a material of a tire tread, and wet skit resistance, silica is preferably used, and precipitated silica is more preferably used.

A content of the silica is, from the viewpoints of fuel economy and wet skid resistance, preferably 30 to 120 parts by mass, more preferably 40 to 120 parts by mass, further preferably 50 to 100 parts by mass, and still further preferably 60 to 80 parts by mass based on 100 parts by mass of the rubber component.

<Silane Coupling Agent>

The crosslinking rubber composition of the present embodiment preferably contains a silane coupling agent from the viewpoints of improvement of dispersibility of the filler and tensile strength of a crosslinked product.

The silane coupling agent has a function to make close the interaction between the rubber component and the inorganic filler, and therefore, is preferably a compound that has a group having affinity with or a binding property to each of the rubber component and the filler, and contains, in one molecule, a sulfur bond portion and an alkoxysilyl group or silanol group portion.

Examples of such a compound include, but are not limited to, bis-[3-(triethoxysilyl)-propyl]-tetrasulfide, bis-[3-(triethoxysilyl)-propyl]-disulfide, bis-[2-(triethoxysilyl)-ethyl]-tetrasulfide, S-[3-(triethoxysilyl)-propyl]octanethioate, a condensate of S-[3-(triethoxysilyl)-propyl]octanethioate and [(triethoxysilyl)-propyl]thiol, and a silane carrying at least one thiol (-SH) functional group (referred to as mercaptosilane) and/or at least one masked thiol group.

A content of the silane coupling agent in the crosslinking rubber composition of the present embodiment is preferably 0.1 parts by mass or more and 30 parts by mass or less, more preferably 0.5 parts by mass or more and 20 parts by mass or less, and further preferably 1.0 part by mass or more and 15 parts by mass or less based on 100 parts by mass of the filler. When the content of the silane coupling agent falls in this range, there is a tendency that the effect resulting from the addition of the silane coupling agent can be further remarkably exhibited.

<Additional Additives>

In the crosslinking rubber composition of the present embodiment, in addition to the above-described components, various additives such as an additional softener, an additional filler, a heat stabilizer, an antistatic agent, a weathering stabilizer, an anti-aging agent, a colorant, and a lubricant can be added.

As the additional softener, any of known softeners can be used.

Examples of the additional filler include calcium carbonate, magnesium carbonate, aluminum sulfate, and barium sulfate.

As the heat stabilizer, the antistatic agent, the weathering stabilizer, the anti-aging agent, the colorant, and the lubricant, any of known materials can be respectively used.

[Method for Producing Crosslinked Rubber]

A method for producing a crosslinked rubber of the present embodiment includes a step of kneading the crosslinking rubber composition of the present embodiment described above.

Examples of a method for kneading the crosslinking rubber composition include, but are not limited to, a melt kneading method using a general mixer such as an open roll, a Banbury mixer, a kneader, a single screw extruder, a double screw extruder, or a multi-screw extruder, and a method in which the respective components are dissolved to be mixed, and then a solvent is removed by heating.

Among these, a melt kneading method using a roll, a Banbury mixer, a kneader or an extruder is preferred from the viewpoints of productivity and good kneadability.

The rubber component used in addition to the rubber polymer (A), a silica-based inorganic filler, carbon black and an additional filler, a silane coupling agent, and an additive such as a rubber softener can be similarly mixed.

Either of a method in which the rubber component, the filler, the silane coupling agent and the additive are kneaded all at once, and a method in which these are mixed dividedly plural times can be employed. After preparing the crosslinking rubber composition, the resultant is molded if necessary, and then heated (at, for example, 140 to 180°C) to cause a crosslinking reaction. A crosslinked rubber composition of the present embodiment is preferably avoided from being stored under high temperature and humidity conditions and/or stored for a long period of time.

[Application]

The crosslinking rubber composition of the present embodiment is applicable to tire members, interiors and exteriors of vehicles, anti-vibration rubbers, belts, shoes, foam materials, various industrial products, and these products contains the crosslinking rubber composition of the present embodiment.

In particular, the crosslinking rubber composition is suitably used in tire members.

As the tire members, the crosslinking rubber composition can be used in, for example, a tread, a carcass, a sidewall, a bead portion and the like of various tires such as a fuel efficient tire, an all-season tire, a high performance tire, a snow tire, and a studless tire. In particular, the crosslinking rubber composition of the present embodiment is excellent in balance among abrasion resistance, fuel economy, wet skid resistance, and snow performance obtained in the form of a vulcanizate, and therefore, is suitably used in a tire tread of a fuel efficient tire, a high performance tire, or a snow tire.

As a method for producing a tire, any of known methods can be employed.

For example, members usually used for production of a tire, such as at least one of a carcass layer, a belt layer, and a tread layer selected from the group consisting of a crosslinking rubber composition before vulcanization and a tire cord, are successively overlayed on a tire forming drum to adhere these to one another, and the drum is pulled out to obtain a green tire. Subsequently, the green tire is vulcanized by heating by an ordinary method, and thus, a desired tire (such as a pneumatic tire) can be produced.

Examples

The present embodiment will now be described in more detail with reference to specific Examples and Comparative Examples, and it is noted that the present embodiment is not limited to the following Examples and Comparative Examples at all.

Various physical properties of the Examples and Comparative Examples were measured by the following methods.

((Physical Property 1) Molecular Weight and Molecular Weight Distribution)

<Measurement Conditions 1>

A rubber polymer obtained in each of Polymerization Examples described below was used as a sample to measure, under specific measurement conditions described below, a chromatogram with a GPC measuring apparatus (trade name "HLC-8320 GPC" manufactured by Tosoh Corporation) including a series of three columns using a polystyrene-based gel as a filler and an RI detector (trade name "HLC 8020" manufactured by Tosoh Corporation), and based on a calibration curve obtained using standard polystyrene, a weight average molecular weight (Mw), a number average molecular weight (Mn) and a molecular weight distribution (Mw/Mn) were obtained.

[Specific Measurement Conditions]

GPC measuring apparatus: trade name "HLC-8320 GPC" manufactured by Tosoh Corporation
Eluent: THF (tetrahydrofuran) containing 5 mmol/L of triethylamine
Guard column: "TSKguardcolumn Super MP(HZ)-H" manufactured by Tosoh Corporation
Column: series of three columns "TSKgel Super Multipore Hz-H" manufactured by Tosoh Corporation
Oven temperature: 40°C
Flow rate: 0.35 mL/min
Sample: A measurement solution was prepared by dissolving 10 mg of a measurement sample in 10 mL of THF, and 10 μL of the measurement solution was injected into the GPC measuring apparatus.

Among various samples measured under <Measurement Conditions 1> described above, a sample found to have a value of the molecular weight distribution (Mw/Mn) less than 1.6 was subjected again to the measurement under

<Measurement Conditions 2> described below, and the thus obtained values were used as measurement values.

For a sample having been subjected to the measurement under <Measurement Conditions 1> and found to have a value of the molecular weight distribution of 1.6 or more, values obtained by the measurement under

<Measurement Conditions 1> were used as measurement values.

<Measurement Conditions 2>

A rubber polymer obtained in each of Polymerization Examples described below was used as a sample to measure, under specific measurement conditions described below, a chromatogram with a GPC measuring apparatus (trade name "HLC-8320 GPC" manufactured by Tosoh Corporation) including a series of three columns using a polystyrene-based gel as a filler and an RI detector (trade name "HLC 8020" manufactured by Tosoh Corporation), and based on a calibration curve obtained using standard polystyrene, a weight average molecular weight (Mw), a number average molecular weight (Mn) and a molecular weight distribution (Mw/Mn) were obtained.

[Specific Measurement Conditions]

Eluent: THF containing 5 mmol/L of triethylamine
Guard column: "TSKguardcolumn Super H-H" manufactured by Tosoh Corporation
Column: "TSKgel Super H5000", "TSKgel Super H6000" and "TSKgel Super H7000" all manufactured by Tosoh Corporation connected in series in the stated order from the upstream side
Oven temperature: 40°C
Flow rate: 0.6 mL/min
Sample: A measurement solution was prepared by dissolving 10 mg of a measurement sample in 20 mL of THF, and 20 $\mu$L of the measurement solution was injected into the GPC measuring apparatus.

((Physical Property 2) Mooney Viscosity of Rubber Polymer)

A rubber polymer obtained in each of Polymerization Examples described below was used as a sample to measure a Mooney viscosity with a Mooney viscometer (trade name "VR1132" manufactured by Ueshima Seisakusho Co., Ltd.) in accordance with ISO 289.
A sample was preheated for 1 minute at 100°C, an L rotor was then rotated at 2 rpm, and torque was measured after 4 minutes to obtain a Mooney viscosity ($ML_{(1+4)}$).

((Physical Property 3) Modification Ratio)

A modification ratio of a rubber polymer obtained in each of Polymerization Examples described below was measured by column adsorption GPC as follows.
A rubber polymer obtained in each of Polymerization Examples used as a sample was subjected to measurement utilizing a property that a modified basic polymer component adsorbs to a GPC column using a silica-based gel as a filler.
A sample solution containing the sample and low molecular weight internal standard polystyrene was measured for an amount of adsorption to a silica-based column based on a difference between a chromatogram measured with a polystyrene-based column and a chromatogram measured with a silica-based column, and thus, a modification ratio was obtained.
Specific measurement conditions were as follows.
A sample found to have a value of the molecular weight distribution of the rubber polymer of 1.6 or more as a result of the measurement performed under <Measurement Conditions 1> of "Physical Property 1" described above was subjected to the measurement under <Measurement Conditions 3> described below, and a sample found to have a value of the molecular weight distribution of the rubber polymer less than 1.6 was subjected to the measurement under <Measurement Conditions 4> described below.

<Measurement Conditions 3: GPC Measurement Conditions using Polystyrene-based Column>

GPC measuring apparatus: trade name "HLC-8320 GPC" manufactured by Tosoh Corporation
Eluent: THF containing 5 mmol/L of triethylamine
Guard column: "TSKguardcolumn Super MP(HZ)-H" manufactured by Tosoh Corporation
Column: series of three columns "TSKgel Super Multipore Hz-H" manufactured by Tosoh Corporation
Oven temperature: 40°C

Flow rate: 0.35 mL/min
RI detector: HLC8020 manufactured by Tosoh Corporation
Sample: A measurement solution was prepared by dissolving 10 mg of a measurement sample and 5 mg of standard polystyrene in 20 mL of THF, and 10 $\mu$L of the measurement solution was injected into the GPC measuring apparatus.

<Measurement Conditions 4: GPC Measurement Conditions using Polystyrene-based Column>

GPC measuring apparatus: trade name "HLC-8320 GPC" manufactured by Tosoh Corporation
Eluent: THF containing 5 mmol/L of triethylamine
Guard column: "TSKguardcolumn Super H-H" manufactured by Tosoh Corporation
Column: "TSKgel Super H5000", "TSKgel Super H6000" and "TSKgel Super H7000" all manufactured by Tosoh Corporation connected in series in the stated order from the upstream side
Oven temperature: 40°C
Flow rate: 0.6 mL/min
RI detector: HLC8020 manufactured by Tosoh Corporation
Sample: A measurement solution was prepared by dissolving 10 mg of a measurement sample in 20 mL of THF, and 20 $\mu$L of the measurement solution was injected into the GPC measuring apparatus.

<GPC Measurement Conditions using Silica-based Column>

GPC measuring apparatus: trade name "HLC-8320 GPC" manufactured by Tosoh Corporation
Eluent: THF
Guard column: "DIOL 4.6 $\times$ 12.5 mm 5 micron"
Column: "Zorbax PSM-1000S", "PSM-300S", "PSM-60S" connected in series in the stated order from the upstream side
Oven temperature: 40°C
Flow rate: 0.5 mL/min
RI detector: HLC8020 manufactured by Tosoh Corporation
Sample: A measurement solution was prepared by dissolving 10 mg of a measurement sample and 5 mg of standard polystyrene in 20 mL of THF, and 50 $\mu$L of the measurement solution was injected into the GPC measuring apparatus.

Calculation Method for Modification Ratio:

Assuming that a whole peak area of the chromatogram obtained with the polystyrene-based column is 100, a peak area P1 of the sample and a peak area P2 of standard polystyrene were obtained. Similarly, assuming that a whole peak area of the chromatogram obtained with the silica-based column is 100, a peak area P3 of the sample and a peak area P4 of standard polystyrene were obtained. Then, based on the thus obtained values of the areas, a modification ratio (%) was obtained in accordance with the following equation:

$$\text{Modification ratio (\%) = } [1 - (P2 \times P3)/(P1 \times P4)] \times 100$$

wherein P1 + P2 = P3 + P4 = 100.

((Physical Property 4) Amount of Bound Styrene)

A rubber polymer obtained in each of Polymerization Examples described below was used as a sample, and 100 mg of the sample was dissolved and diluted to 100 mL of chloroform to obtain a measurement sample.

An amount of absorption by a phenyl group of styrene at an ultraviolet absorption wavelength (about 254 nm) was used to measure an amount of bound styrene (% by mass) based on 100% by mass of the rubber polymer used as the sample (measuring apparatus: spectrophotometer "UV-2450" manufactured by Shimadzu Corporation).

((Physical Property 5) Microstructure of Butadiene Portion (1,2-vinyl Bond Content))

A rubber polymer obtained in each of Polymerization Examples described below was used as a sample, and 50 mg of the sample was dissolved in 10 mL of carbon disulfide to obtain a measurement sample.

An infrared spectrum was measured in a range of 600 to 1000 cm$^{-1}$ with a solution cell used, and based on an absorbance at a prescribed wavelength, a microstructure of a butadiene portion, namely, a 1,2-vinyl bond content (% by mol), was obtained in accordance with an equation of Hampton's method (method described in R. R. Hampton, Analytical Chemistry 21, 923 (1949)) (measuring apparatus: Fourier transform infrared spectrophotometer "FT-IR230" manufactured by JASCO Corporation).

It is noted that the "vinyl and butylene unit content" before hydrogenation corresponds to the "1,2-vinyl bond content", and these contents have the same value.

Accordingly, "vinyl and butylene unit content" shown in Table 1 corresponds to the 1,2-vinyl bond content before hydrogenation.

((Physical Property 6) Hydrogenation Rate of Rubber Polymer and Ethylene Structure Content of Rubber Polymer)

A rubber polymer obtained in each of Polymerization Examples described below was used as a sample to measure, by $^1$H-NMR measurement, a hydrogenation rate and an ethylene structure content of the rubber polymer. Conditions for the $^1$H-NMR measurement were as follows:

<Measurement Conditions>
Apparatus: JNM-LA400 (manufactured by JEOL Ltd.)
Solvent: deuterated chloroform
Measurement sample: rubber polymer
Sample concentration: 50 mg/mL
Observation frequency: 400 MHz
Chemical shift reference: TMS (tetramethylsilane)
Pulse delay: 2.904 sec
Number of scans: 64
Pulse width: 45°
Measurement temperature: 26°C

((Physical Property 7) Styrene Block Content of Rubber Polymer)

Assuming that a chain of eight or more styrene structure units is defined as a styrene block, a content of the styrene block was obtained as follows.

Based on a $^1$H-NMR spectrum at 400 MHz measured with deuterated chloroform used as a solvent, a ratio of an integrated value of the following (X) in each chemical shift range was obtained, and thus, the content of the styrene block contained in the rubber polymer was obtained.

(X) Chain of eight or more aromatic vinyl compounds: $6.00 \leq X < 6.68$

((Physical Property 8) Iodine Value of Rubber Polymer)

An iodine value was measured as follows.

A sample was dissolved in cyclohexane, an iodine monochloride solution was added thereto, and the resultant was left to stand still in a dark place. Thereafter, potassium iodide and water were added thereto, and the resultant was titrated with a sodium thiosulfate solution. When the color of the resultant solution became pale yellow, a starch solution was added thereto, the resultant was titrated until blue color disappeared, and thus, an iodine value was obtained.

[Production of Rubber Polymer]

(Preparation of Hydrogenation Catalyst)

A hydrogenation catalyst used in preparing a rubber polymer in each of Polymerization Examples described below was prepared as follows.

A nitrogen-substituted reaction vessel was charged with 1 L of dried and purified cyclohexane, and 100 mmol of bis($\eta$5-cyclopentadienyl)titanium dichloride was added thereto. Under sufficient stirring, a n-hexane solution containing 200 mmol of trimethyl aluminum was added thereto to be reacted for about 3 days at room temperature, and thus, a hydrogenation catalyst (TC-1) was obtained.

(Polymerization of Rubber Polymer)

<(Polymerization Example 1) Rubber Polymer 1>

A temperature-controllable autoclave having an internal capacity of 40 L and equipped with a stirrer and a jacket was used as a reactor. The reactor was charged with 2,700 g of 1,3-butadiene, 300 g of styrene, and 21,000 g of cyclohexane, from which impurities had been precedently removed, and 30 mmol of tetrahydrofuran (THF) and 11.6 mmol of 2,2-bis(2-oxolanyl)propane used as polar substances, and the internal temperature of the reactor was kept at 43°C.
As a polymerization initiator, 68.0 mmol of n-butyllithium was supplied to the reactor.
After starting a polymerization reaction, the temperature within the reactor started to increase due to heat generation through polymerization, and the temperature within the reactor finally reached 76°C. Two minutes after reaching this reaction temperature peak, 13.6 mmol of 2,2-dimethoxy-1-(3-trimethoxysilylpropyl)-1-aza-2-silacyclopentane (compound 1) used as a modifier was added to the reactor to perform a coupling reaction for 20 minutes. To the thus obtained polymer solution, 13.3 mmol of methanol used as a reaction terminator was added, a part of the rubber polymer solution before hydrogenation was extracted for analysis to be desolvated with a dryer, and thus, a rubber polymer before hydrogenation was obtained.
Thereafter, to the rubber polymer solution before hydrogenation, the hydrogenation catalyst (TC-1) was added in an amount, in terms of titanium, of 70 ppm per 100 parts by mass of the rubber polymer before hydrogenation, followed by a hydrogenation reaction at a hydrogen pressure of 0.8 MPa and an average temperature of 85°C for 40 minutes, and thus, a rubber polymer 1 was obtained. The rubber polymer 1 thus obtained had an iodine value of 108 (g/100 g).
To a solution of the thus obtained rubber polymer, 12.6 g of n-octadecyl-3-(3,5-di-t-butyl-4-hydroxyphenyl)-propionate and 3.0 g of 4,6-bis(octylthiomethyl)-o-cresol were added as antioxidants, and the resultant was dried.
Analysis results are shown in Table 1.

<(Polymerization Examples 2 and 3) Rubber Polymers 2 and 3>

A rubber polymer 2 and a rubber polymer 3 were obtained in the same manner as in Polymerization Example 1 except that the hydrogenation reaction was performed respectively for 60 minutes and 80 minutes.
The rubber polymer 2 thus obtained had an iodine value of 65 (g/100 g), and the rubber polymer 3 thus obtained had an iodine value of 22 (g/100 g).
Analysis results are shown in Table 1.

<(Polymerization Example 4) Rubber Polymer 4>

A temperature-controllable autoclave having an internal capacity of 40 L and equipped with a stirrer and a jacket was used as a reactor. The reactor was charged with 3,000 g of 1,3-butadiene, and 21,000 g of cyclohexane, from which impurities had been precedently removed, and 90 mmol of tetrahydrofuran (THF) used as polar substances, and the internal temperature of the reactor was kept at 45°C.
As a polymerization initiator, 74.0 mmol of n-butyllithium was supplied to the reactor.
After starting a polymerization reaction, the temperature within the reactor started to increase due to heat generation through polymerization, and the temperature within the reactor finally reached 76°C. Two minutes after reaching this reaction temperature peak, 14.8 mmol of silicon tetrachloride (compound 2) used as a modifier was added to the reactor to perform a coupling reaction for 20 minutes. To the thus obtained polymer solution, 14.4 mmol of methanol used as a reaction terminator was added, and a part of the rubber polymer solution before hydrogenation was extracted for analysis to be desolvated with a dryer, and thus, a rubber polymer before hydrogenation was obtained.
Thereafter, to the rubber polymer solution before hydrogenation, the hydrogenation catalyst (TC-1) was added in an amount, in terms of titanium, of 70 ppm per 100 parts by mass of the rubber polymer before hydrogenation, followed by a hydrogenation reaction at a hydrogen pressure of 0.8 MPa and an average temperature of 85°C for 10 minutes, and thus, a rubber polymer 4 was obtained. The rubber polymer 4 thus obtained had an iodine value of 418 (g/100 g).
To a solution of the thus obtained rubber polymer, 12.6 g of n-octadecyl-3-(3,5-di-t-butyl-4-hydroxyphenyl)-propionate and 3.0 g of 4,6-bis(octylthiomethyl)-o-cresol were added as antioxidants, and the resultant was dried.
Analysis results are shown in Table 1.

<(Polymerization Example 5) Rubber Polymer 5>

A temperature-controllable autoclave having an internal capacity of 40 L and equipped with a stirrer and a jacket was used as a reactor. The reactor was charged with 1,000 g of 1,3-butadiene, 1,350 g of styrene, and 21,000 g of cyclohexane, from which impurities had been precedently removed, and 30 mmol of tetrahydrofuran (THF) and 5.4 mmol of 2,2-bis(2-oxolanyl)propane used as polar substances, and the internal temperature of the reactor was kept at 48°C.

As a polymerization initiator, 54.0 mmol of n-butyllithium was supplied to the reactor.

After starting a polymerization reaction, the temperature within the reactor started to increase due to heat generation through polymerization, and after monomer conversion within the reactor reached 96%, 650 g of butadiene was additionally added to be further reacted. The temperature within the reactor finally reached 82°C. Two minutes after reaching this reaction temperature peak, 10.8 mmol of silicon tetrachloride (compound 2) used as a modifier was added to the reactor to perform a coupling reaction for 20 minutes. To the thus obtained polymer solution, 10.5 mmol of methanol used as a reaction terminator was added, and a part of the rubber polymer solution before hydrogenation was extracted for analysis to be desolvated with a dryer, and thus, a rubber polymer before hydrogenation was obtained.

Thereafter, to the rubber polymer solution before hydrogenation, the hydrogenation catalyst (TC-1) was added in an amount, in terms of titanium, of 70 ppm per 100 parts by mass of the rubber polymer before hydrogenation, followed by a hydrogenation reaction at a hydrogen pressure of 0.8 MPa and an average temperature of 85°C for 40 minutes, and thus, a rubber polymer 5 was obtained. The rubber polymer 5 thus obtained had an iodine value of 39 (g/100 g).

To a solution of the thus obtained rubber polymer, 12.6 g of n-octadecyl-3-(3,5-di-t-butyl-4-hydroxyphenyl)-propionate and 3.0 g of 4,6-bis(octylthiomethyl)-o-cresol were added as antioxidants, and the resultant was dried.

Analysis results are shown in Table 1.

The modifiers shown in Table 1 are as follows:

Compound 1: 2,2-dimethoxy-1-(3-trimethoxysilylpropyl)-1-aza-2-silacyclopentane
Compound 2: silicon tetrachloride

[Table 1]

| | | Polymerization Example 1 | Polymerization Example 2 | Polymerization Example 3 | Polymerization Example 4 | Polymerization Example 5 |
|---|---|---|---|---|---|---|
| Rubber Polymer (Polymer) | | 1 | 2 | 3 | 4 | 5 |
| Amount of Bound Styrene | mass% | 8 | 8 | 8 | 0 | 45 |
| Vinyl and Butylene Unit Content | mol% | 39 | 39 | 39 | 15 | 15 |
| Styrene Block Content | mass% | 1.5 | 1.5 | 1.5 | 0 | 2.6 |
| Modifier | | Compound 1 | Compound 1 | Compound 1 | Compound 2 | Compound 2 |
| Modification Ratio | % | 80 | 80 | 80 | 0 | 0 |
| Weight Average Molecular Weight | ten thousand | 35 | 35 | 35 | 38 | 32 |
| Mooney Viscosity | ML(1+4) @100°C | 66 | 72 | 83 | 55 | 96 |
| Iodine Value | I g/100g | 108 | 65 | 22 | 418 | 39 |
| Ethylene Structure | mass% | 33.1 | 42.3 | 51.5 | 0.1 | 38.5 |
| Hydrogenation Rate | mol% | 75 | 85 | 95 | 11 | 85 |

[Examples 1 to 17 and Comparative Examples 1 to 3]

Respective components shown in Tables 2 to 4 were mixed to obtain crosslinking rubber compositions.

A closed kneader (having an internal capacity of 0.3 L) equipped with a temperature controller was used to knead, as first stage kneading, one of the rubber polymers 1 to 5 (A) and an additional rubber component, a reinforcing filler, a silane coupling agent, an extender oil, a zinc powder, stearic acid and wax under conditions of a filling rate of 65% and a rotor speed of 30 to 50 rpm.

Here, the temperature of the closed mixer was controlled to obtain each rubber composition (compound) at a discharge temperature of 155 to 160°C.

Next, as second stage kneading, after the compound obtained as described above was cooled to room temperature, an anti-aging agent was added thereto, and the resultant was kneaded again for improving dispersibility of the reinforcing filler. Also in this case, the discharge temperature of the compound was adjusted to 155 to 160°C by the temperature control of the mixer.

After cooling, as third stage kneading, the resultant was kneaded with the sulfur (B) and the vulcanization accelerator (D) added thereto with an open roll set to 70°C to obtain a crosslinking rubber composition. The radical generator (C) and the polyfunctional crosslinking aid (E) were also added in the third stage kneading.

Thereafter, the resultant was molded, and vulcanized with a vulcanization press at 160°C for 20 minutes.

The rubber composition after the vulcanization was evaluated by the following methods.

Results of the evaluation are shown in Tables 2 to 4.

(Blended Materials)

<Rubber Component>

Polymers 1 to 5: rubber polymers 1 to 5 obtained in Polymerization Examples
EPDM: ethylene-propylene rubber ("Esplene 505A" manufactured by Sumitomo Chemical Co., Ltd.)
NR: natural rubber (uncoagulated product)

<Reinforcing Filler>

Silica (trade name "Ultrasil 7000GR" manufactured by Evonik Degussa, nitrogen adsorption specific surface area: 170 m$^2$/g)
Carbon black (trade name "Seast KH (N339)" manufactured by Tokai Carbon Co., Ltd.)

<Silane Coupling Agent>

Silane coupling agent (trade name "Si75" manufactured by Evonik Degussa, bis(triethoxysilylpropyl)disulfide)

<Vulcanizing Agent>

Sulfur (B)

<Radical Generator (C)>

Peroxide (PO) ("Percumyl D" manufactured by Nippon Oil & Fats Co., Ltd., active ingredient: 40%)

It is noted that each parenthesized numerical value shown as "actual amount" in the tables indicates an active ingredient content of the radical generator.

<Vulcanization Accelerator (D)>

CBS (N-cyclohexyl-2-benzothiazylsulfineamide)

<Polyfunctional Crosslinking Aid (E)>

Triallylisocyanurate ("TAIC" manufactured by Mitsubishi Chemical Corporation)

<Vulcanization Aid>

Zinc powder
Stearic acid

<Others>

Wax (WAX) (Paraffin wax)
Anti-aging agent (N-(1,3-dimethylbutyl)-N'-phenyl-p-phenylenediamine)

In the tables, "PO" refers to the radical generator, a parenthesized numerical value shown as "actual amount (C)" indicates an active ingredient content of the radical generator, and an unparenthesized numerical value indicates the amount added.

"S/PO (actual value)" indicates "the content of the sulfur (B)/the content of the radical generator (C)".

"PO (actual amount)/St" indicates "the content of the radical generator (C)/the content of the vinyl aromatic monomer unit in the rubber polymer (A)".

"D/(B + C)" indicates "the content of vulcanization accelerator (D)/the content of the sulfur (B) + the content of the radical generator (C)".

(Evaluation of Properties)

<(Evaluation 1) Vulcanization Rate>

In accordance with "Determination of cure characteristics with oscillating curemeters" of JIS K6300-2, each crosslinking rubber composition of Examples and Comparative Examples was measured, at a temperature of 160°C with a rotorless curemeter used as a rheometer, for a vulcanization curve, using an obtained torque as the ordinate and a vulcanization time (min) as the abscissa.

In the thus obtained vulcanization curve, a vulcanization time (min) required for obtaining a maximum value MH of the torque from the start of the vulcanization was determined as tc(max).

According to the regulation of JIS K6300-2, a difference between a minimum value ML and the maximum value MH of the torque was set as ME (ME = MH - ML), and a vulcanization time (min) elapsed from the start of the test until the torque became ML + 90% ME was determined as T90, which was defined as the vulcanization rate.

The result was expressed as an index obtained by assuming that the vulcanization rate of Comparative Example 1 was 100.

A smaller index indicates a higher vulcanization rate, and better productivity.

Tables 2 to 4 show, with the vulcanization rate of Comparative Example 1 used as a reference, signs corresponding to changes in the following ranges.

AA: improvement by 20% or more
A: improvement by 15% or more and less than 20%
B: improvement by 5% or more and less than 15%
C: improvement by 0% or more and less than 5%
D: deterioration by 0% or more and less than 10%
E: deterioration by 10% or more

<(Evaluation 2) Tensile Modulus>

A test piece of each rubber composition after vulcanization was used for evaluating a tensile modulus (M300) (MPa) by the following test method.

A tensile modulus of each example obtained as a result was expressed as an index by assuming that the result of Comparative Example 1 was 100.

A larger index indicates a higher tensile modulus, and better toughness of the rubber.

[Measurement of Tensile Modulus (M300)]

A JIS No. 3 dumbbell test piece was punched out from a test piece of each rubber composition after vulcanization, and was subjected to a tensile test at a tensile speed of 500 mm/min in accordance with JIS K6251:2010 to measure a tensile modulus (MPa) at an elongation of 300% under a condition of 23°C.

Tables 2 to 4 show, with the tensile modulus of Comparative Example 1 used as a reference, signs corresponding to changes in the following ranges.

　　AA: improvement by 20% or more
　　A: improvement by 15% or more and less than 20%
　　B: improvement by 5% or more and less than 15%
　　C: improvement by 0% or more and less than 5%
　　D: deterioration by 0% or more and less than 10%
　　E: deterioration by 10% or more

<(Evaluation 3) Tear Strength>

Tear strength (MPa) of each rubber composition after vulcanization was measured in accordance with JIS K 6252 using a crescent-shaped test piece under conditions of room temperature and a tensile speed of 500 mm/min.

Tear strength of each example was expressed as an index by assuming that the tear strength of Comparative Example 1 was 100. A larger index indicates higher tear strength, and better durability of the rubber composition.

Tables 2 to 4 show, with the tear strength of Comparative Example 1 used as a reference, signs corresponding to changes in the following ranges.

　　AA: improvement by 20% or more
　　A: improvement by 15% or more and less than 20%
　　B: improvement by 5% or more and less than 15%
　　C: improvement by 0% or more and less than 5%
　　D: deterioration by 0% or more and less than 10%
　　E: deterioration by 10% or more

<(Evaluation 4) Abrasion Resistance>

An Akron abrasion tester (manufactured by Yasuda Seiki Seisakusho, Ltd.) was used and a rubber composition after vulcanization was used as a measurement sample to measure an abrasion amount (cc) caused at a load of 44.4 N through 1,000 rotations in accordance with JIS K6264-2, and the obtained result was expressed as an index by assuming that the result of Comparative Example 1 was 100. A larger index indicates better abrasion resistance.

Tables 2 to 4 show, with the abrasion resistance of Comparative Example 1 used as a reference, signs corresponding to changes in the following ranges.

　　AA: improvement by 20% or more
　　A: improvement by 15% or more and less than 20%
　　B: improvement by 5% or more and less than 15%
　　C: improvement by 0% or more and less than 5%
　　D: deterioration by 0% or more and less than 10%
　　E: deterioration by 10% or more

[Table 2]

| | Unit | Example 1 | Example 2 | Example 3 | Example 4 | Example 5 | Example 6 | Example 7 | Example 8 | Example 9 |
|---|---|---|---|---|---|---|---|---|---|---|
| | | Polymer 1 | Polymer 2 | Polymer 3 | Polymer 2 | Polymer 2 | Polymer 2 | Polymer 2 | Polymer 2 | Polymer 2 |
| Polymer 1 | parts by mass | 100 | | | | | | | | |
| Polymer 2 | parts by mass | | 100 | | 100 | 80 | 80 | 100 | 100 | 100 |
| Polymer 3 | parts by mass | | | 100 | | | | | | |
| Polymer 4 | parts by mass | | | | | | | | | |
| Polymer 5 | parts by mass | | | | | | | | | |
| EPDM | parts by mass | | | | | 20 | | | | |
| NR | parts by mass | | | | | | 20 | | | |
| Silica | parts by mass | 75 | 75 | 75 | 75 | 75 | 75 | 75 | 75 | 75 |
| Carbon Black | parts by mass | 5 | 5 | 5 | 5 | 5 | 5 | 5 | 5 | 5 |
| Silane Coupling Agent | parts by mass | 6 | 6 | 6 | 6 | 6 | 6 | 6 | 6 | 6 |
| Extender Oil | parts by mass | 20 | 20 | 20 | 20 | 20 | 20 | 20 | 20 | 20 |
| Zinc Powder | parts by mass | 2 | 2 | 2 | 2 | 2 | 2 | 2 | 2 | 2 |
| Stearic Acid | parts by mass | 2 | 2 | 2 | 2 | 2 | 2 | 2 | 2 | 2 |
| Anti-aging Agent | parts by mass | 2 | 2 | 2 | 2 | 2 | 2 | 2 | 2 | 2 |
| WAX | parts by mass | 1 | 1 | 1 | 1 | 1 | 1 | 1 | 1 | 1 |
| Sulfur (B) | parts by mass | 1.4 | 1.4 | 1.4 | 1.4 | 1.4 | 1.4 | 1.8 | 1.4 | 1.4 |
| PO (actual amount (C)) | parts by mass | 1.75 (0.7) | 1.75 (0.7) | 1.75 (0.7) | 1.75 (0.7) | 1.75 (0.7) | 1.75 (0.7) | 1.75 (0.7) | 2.25 (0.9) | 1.75 (0.7) |
| Vulcanization Accelerator (D) | parts by mass | 1.4 | 1.4 | 1.4 | 1.4 | 1.4 | 1.4 | 1.4 | 1.4 | 1.7 |
| TAIC (E) | parts by mass | 0 | 0 | 0 | 0.5 | 0.5 | 0.5 | 0 | 0 | 0.75 |
| S/PO (actual amount) | - | 2.00 | 2.00 | 2.00 | 2.00 | 2.00 | 2.00 | 2.57 | 1.56 | 2.0 |
| PO (actual amount)/St | parts by mass/ mass% | 0.088 | 0.088 | 0.088 | 0.088 | 0.109 | 0.109 | 0.088 | 0.113 | 0.088 |
| D/ (B+C) | - | 0.67 | 0.67 | 0.67 | 0.67 | 0.67 | 0.67 | 0.56 | 0.61 | 0.81 |
| Vulcanization Rate | | B | B | B | A | A | AA | AA | AA | AA |

(continued)

|  | Unit | Example 1 | Example 2 | Example 3 | Example 4 | Example 5 | Example 6 | Example 7 | Example 8 | Example 9 |
|---|---|---|---|---|---|---|---|---|---|---|
|  |  | Polymer 1 | Polymer 2 | Polymer 3 | Polymer 2 | Polymer 2 | Polymer 2 | Polymer 2 | Polymer 2 | Polymer 2 |
| Tensile Modulus |  | B | B | B | A | A | A | AA | A | A |
| Tear Strength |  | B | B | B | A | A | A | A | A | AA |
| Abrasion Resistance |  | B | B | B | A | A | A | A | AA | A |

[Table 3]

| | Unit | Example 10* | Example 11 | Example 12 | Example 13 | Example 14 | Example 15 | Example 16 | Example 17 |
|---|---|---|---|---|---|---|---|---|---|
| | | Polymer 2 | Polymer 2 | Polymer 5 | Polymer 2 | Polymer 2 | Polymer 2 | Polymer 2 | Polymer 5 |
| Polymer 1 | parts by mass | | | | | | | | |
| Polymer 2 | parts by mass | 100 | 100 | | 100 | 100 | 100 | 100 | |
| Polymer 3 | parts by mass | | | | | | | | |
| Polymer 4 | parts by mass | | | | | | | | |
| Polymer 5 | parts by mass | | | 100 | | | | | 100 |
| EPDM | parts by mass | | | | | | | | |
| NR | parts by mass | | | | | | | | |
| Silica | parts by mass | 75 | 75 | 75 | 75 | 75 | 75 | 75 | 75 |
| Carbon Black | parts by mass | 5 | 5 | 5 | 5 | 5 | 5 | 5 | 5 |
| Silane Coupling Agent | parts by mass | 6 | 6 | 6 | 6 | 6 | 6 | 6 | 6 |
| Extender Oil | parts by mass | 20 | 20 | 20 | 20 | 20 | 20 | 20 | 20 |
| Zinc Powder | parts by mass | 2 | 2 | 2 | 2 | 2 | 2 | 2 | 2 |
| Stearic Acid | parts by mass | 2 | 2 | 2 | 2 | 2 | 2 | 2 | 2 |
| Anti-aging Agent | parts by mass | 2 | 2 | 2 | 2 | 2 | 2 | 2 | 2 |
| WAX | parts by mass | 1 | 1 | 1 | 1 | 1 | 1 | 1 | 1 |
| Sulfur (B) | parts by mass | 1.4 | 0.7 | 1.4 | 1.4 | 0.2 | 4.5 | 1.4 | 1.4 |
| PO (actual amount (C)) | parts by mass | 1.75 (0.7) | 1.75 (0.7) | 1.75 (0.7) | 1.75 (0.7) | 11.25 (4.5) | 0.75 (0.3) | 0.48 (0.19) | 3.38 (1.35) |
| Vulcanization Accelerator (D) | parts by mass | 1.4 | 1.4 | 1.4 | 0.7 | 1.4 | 1.4 | 1.4 | 1.4 |
| TAIC (E) | parts by mass | 6 | 0 | 0 | 0 | 0 | 0 | 0 | 0 |
| S/PO (actual amount) | - | 2.00 | 1.00 | 2.00 | 2.00 | 0.04 | 15.00 | 7.4 | 1.0 |
| PO (actual amount)/St | parts by mass/mass% | 0.088 | 0.088 | 0.016 | 0.088 | 0.563 | 0.038 | 0.024 | 0.030 |
| D/(B+C) | - | 0.67 | 1.00 | 0.67 | 0.33 | 0.30 | 0.29 | 0.88 | 0.51 |
| Vulcanization Rate | | A | C | B | C | B | AA | B | A |

EP 3 988 327 B1

28

(continued)

|  | Unit | Example 10* | Example 11 | Example 12 | Example 13 | Example 14 | Example 15 | Example 16 | Example 17 |
|---|---|---|---|---|---|---|---|---|---|
|  |  | Polymer 2 | Polymer 2 | Polymer 5 | Polymer 2 | Polymer 2 | Polymer 2 | Polymer 2 | Polymer 5 |
| Tensile Modulus |  | C | B | B | B | C | AA | B | B |
| Tear Strength |  | E | B | B | B | B | C | C | A |
| Abrasion Resistance |  | E | C | C | C | C | C | C | B |

* reference example

## EP 3 988 327 B1

[Table 4]

| | Unit | Comparative Example 1 | Comparative Example 2 | Comparative Example 3 |
|---|---|---|---|---|
| | | Polymer 4 | Polymer 4 | Polymer 2 |
| Polymer 1 | parts by mass | | | |
| Polymer 2 | parts by mass | | | 100 |
| Polymer 3 | parts by mass | | | |
| Polymer 4 | parts by mass | 100 | 80 | |
| Polymer 5 | parts by mass | | | |
| EPDM | parts by mass | | 20 | |
| NR | parts by mass | | | |
| Silica | parts by mass | 75 | 75 | 75 |
| Carbon Black | parts by mass | 5 | 5 | 5 |
| Silane Coupling Agent | parts by mass | 6 | 6 | 6 |
| Extender Oil | parts by mass | 20 | 20 | 20 |
| Zinc Powder | parts by mass | 2 | 2 | 2 |
| Stearic Acid | parts by mass | 2 | 2 | 2 |
| Anti-aging Agent | parts by mass | 2 | 2 | 2 |
| WAX | parts by mass | 1 | 1 | 1 |
| Sulfur (B) | parts by mass | 1.4 | 1.4 | 1.4 |
| PO (actual amount (C)) | parts by mass | 0 | 0 | 0 |
| Vulcanization Accelerator (D) | parts by mass | 1.4 | 1.4 | 1.4 |
| TAIC (E) | parts by mass | 0 | 0 | 0 |
| S/PO (actual amount) | - | 2.00 | 2.00 | 2.00 |
| PO (actual amount)/St | parts by mass/ mass% | $\infty$ | $\infty$ | 0 |
| D/(B+C) | - | 1.00 | 1.00 | 1.00 |
| Vulcanization Rate | | C | B | E |
| Tensile Modulus | | C | C | E |
| Tear Strength | | C | C | E |
| Abrasion Resistance | | C | C | E |

The crosslinking rubber composition of the present embodiment is industrially applicable in the fields of tire members, interiors and exteriors of vehicles, anti-vibration rubbers, belts, shoes, foam materials, and various industrial products.

**Claims**

1. A crosslinking rubber composition, comprising:

100 parts by mass of a rubber polymer (A) having an iodine value measured in accordance with a method described in JIS K 0070:1992 of 10 to 250 (g/100 g) and comprising 3% by mass or more of an ethylene structure and less than 10% by mass of a vinyl aromatic monomer block;

0.1 to 5.0 parts by mass of sulfur (B) based on 100 parts by mass of the rubber polymer (A);

0.1 to 5.0 parts by mass of a radical generator (C) based on 100 parts by mass of the rubber polymer (A);

0.1 to 5.0 parts by mass of a vulcanization accelerator (D) based on 100 parts by mass of the rubber polymer (A); and

3.0 parts by mass or less of a polyfunctional crosslinking aid (E), based on 100 parts by mass of rubber component contained in the crosslinking rubber composition.

2. The crosslinking rubber composition according to claim 1,
   wherein the rubber polymer (A) contains 5% by mass or more of a vinyl aromatic monomer unit.

3. The crosslinking rubber composition according to claim 1 or 2,
   wherein the rubber polymer (A) has a vinyl and butylene unit content of 20% by mol or more.

4. The crosslinking rubber composition according to any one of claims 1 to 3,
   wherein the rubber polymer (A) contains a nitrogen atom.

5. The crosslinking rubber composition according to claim 4,
   wherein the rubber polymer (A) has a modification ratio measured by column adsorption GPC of 40% by mass or more.

6. The crosslinking rubber composition according to any one of claims 1 to 5,
   wherein an average iodine value of an entire rubber component measured in accordance with a method described in JIS K 0070:1992 is 250 (g/100 g) or less.

7. The crosslinking rubber composition according to any one of claims 1 to 6,
   wherein a content of the sulfur (B) is higher than a content of the radical generator (C).

8. The crosslinking rubber composition according to any one of claims 1 to 7,
   wherein "a content of the sulfur (B)/a content of the radical generator (C)" is more than 1.67.

9. The crosslinking rubber composition according to any one of claims 2 to 8,
   wherein "a content of the radical generator (C)/a content of the vinyl aromatic monomer unit in the rubber polymer (A)" is 0.026 or more.

10. The crosslinking rubber composition according to any one of claims 1 to 9,
    wherein "(a content of the sulfur (B) + a content of the radical generator (C)) $\times$ 0.5" is smaller than "a content of the vulcanization accelerator (D)".

11. The crosslinking rubber composition according to any one of claims 1 to 10, comprising
    the polyfunctional crosslinking aid (E).

12. The crosslinking rubber composition according to any one of claims 1 to 11, comprising
    3 to 40 parts by mass of a resin based on 100 parts by mass of a rubber component contained in the crosslinking rubber composition.

13. The crosslinking rubber composition according to any one of claims 1 to 12, comprising
    30 to 120 parts by mass of silica based on 100 parts by mass of a rubber component contained in the crosslinking rubber composition.

14. A method for producing a crosslinked rubber, comprising a step of kneading the crosslinking rubber composition according to any one of claims 1 to 13.

15. A tread for a tire, comprising the crosslinking rubber composition according to any one of claims 1 to 13.

**Patentansprüche**

1. Vernetzende Kautschukzusammensetzung, umfassend:

100 Massenteile eines Kautschukpolymers (A) mit einer gemäß einem in JIS K 0070:1992 beschriebenen Verfahren gemessenen Jodzahl von 10 bis 250 (g/100 g), welches 3 Massen-% oder mehr einer Ethylenstruktur und weniger als 10 Massen-% eines vinylaromatischen Monomerblocks enthält;

0,1 bis 5,0 Massenteile Schwefel (B), bezogen auf 100 Massenteile des Kautschukpolymers (A);

0,1 bis 5,0 Massenteile eines Radikalbildners (C), bezogen auf 100 Massenteile des Kautschukpolymers (A);

0,1 bis 5,0 Massenteile eines Vulkanisationsbeschleunigers (D), bezogen auf 100 Massenteile des Kautschukpolymers (A); und

3,0 Massenteile oder weniger eines polyfunktionellen Vernetzungshilfsmittels (E), bezogen auf 100 Massenteile der in der vernetzenden Kautschukzusammensetzung enthaltenen Kautschukkomponente.

2. Vernetzende Kautschukzusammensetzung nach Anspruch 1,
   wobei das Kautschukpolymer (A) 5 Massen-% oder mehr einer vinylaromatischen Monomereinheit enthält.

3. Vernetzende Kautschukzusammensetzung nach Anspruch 1 oder 2,
   wobei das Kautschukpolymer (A) einen Gehalt an Vinyl- und Butyleneinheiten von 20 Mol-% oder mehr aufweist.

4. Vernetzende Kautschukzusammensetzung nach einem der Ansprüche 1 bis 3,
   wobei das Kautschukpolymer (A) ein Stickstoffatom enthält.

5. Vernetzende Kautschukzusammensetzung nach Anspruch 4,
   wobei das Kautschukpolymer (A) einen durch Säulenadsorptions-GPC gemessenen Modifikationsanteil von 40 Massen-% oder mehr aufweist.

6. Vernetzende Kautschukzusammensetzung nach einem der Ansprüche 1 bis 5,
   wobei die durchschnittliche Jodzahl einer gesamten Kautschukkomponente, gemessen nach einem in JIS K 0070:1992 beschriebenen Verfahren, 250 (g/100 g) oder weniger beträgt.

7. Vernetzende Kautschukzusammensetzung nach einem der Ansprüche 1 bis 6,
   wobei der Gehalt des Schwefels (B) höher ist als der Gehalt des Radikalbildners (C).

8. Vernetzende Kautschukzusammensetzung nach einem der Ansprüche 1 bis 7,
   wobei "der Gehalt des Schwefels (B)/der Gehalt des Radikalbildners (C)" mehr als 1,67 beträgt.

9. Vernetzende Kautschukzusammensetzung nach einem der Ansprüche 2 bis 8,
   wobei "der Gehalt des Radikalbildners (C)/der Gehalt der vinylaromatischen Monomereinheit in dem Kautschukpolymer (A)" 0,026 oder mehr ist.

10. Vernetzende Kautschukzusammensetzung nach einem der Ansprüche 1 bis 9,
    wobei "(der Gehalt des Schwefels (B) + der Gehalt des Radikalbildners (C)) $\times$ 0,5" kleiner ist als "der Gehalt des Vulkanisationsbeschleunigers (D)".

11. Vernetzende Kautschukzusammensetzung nach einem der Ansprüche 1 bis 10, welche die das polyfunktionelle Vernetzungshilfsmittel (E) enthält.

12. Vernetzende Kautschukzusammensetzung nach einem der Ansprüche 1 bis 11, welche
    3 bis 40 Massenteile eines Harzes, bezogen auf 100 Massenteile einer in der vernetzenden Kautschukzusammensetzung enthaltenen Kautschukkomponente, enthält.

13. Vernetzende Kautschukzusammensetzung nach einem der Ansprüche 1 bis 12, welche
    30 bis 120 Massenteile Siliciumdioxid, bezogen auf 100 Massenteile einer in der vernetzenden Kautschukzusammensetzung enthaltenen Kautschukkomponente, enthält.

14. Verfahren zur Herstellung eines vernetzten Kautschuks, welches einen Schritt des Knetens der vernetzenden Kautschukzusammensetzung nach einem der Ansprüche 1 bis 13 aufweist.

15. Lauffläche für einen Reifen, welche die vernetzende Kautschukzusammensetzung nach einem der Ansprüche 1 bis 13 enthält.

**Revendications**

1. Composition de caoutchouc réticulable, comprenant :

    100 parties en masse d'un polymère de caoutchouc (A) ayant un indice d'iode mesuré conformément à un procédé décrit dans la JIS K 0070:1992 de 10 à 250 (g/100 g) et comprenant 3 % en masse ou plus d'une structure d'éthylène et moins de 10 % en masse d'une séquence de monomère aromatique de vinyle ;
    0,1 à 5,0 parties en masse de soufre (B) sur la base de 100 parties en masse du polymère de caoutchouc (A) ;
    0,1 à 5,0 parties en masse d'un générateur de radicaux (C) sur la base de 100 parties en masse du polymère de caoutchouc (A) ;
    0,1 à 5,0 parties en masse d'un accélérateur de vulcanisation (D) sur la base de 100 parties en masse du polymère de caoutchouc (A) ; et
    3,0 parties en masse ou moins d'un auxiliaire de réticulation polyfonctionnel (E), sur la base de 100 parties en masse de composant de caoutchouc contenu dans la composition de caoutchouc réticulable.

2. Composition de caoutchouc réticulable selon la revendication 1,
    dans laquelle le polymère de caoutchouc (A) contient 5 % en masse ou plus d'une unité monomère aromatique de vinyle.

3. Composition de caoutchouc réticulable selon la revendication 1 ou 2,
    dans laquelle le polymère de caoutchouc (A) a une teneur en unités vinyle et butylène de 20 % en moles ou plus.

4. Composition de caoutchouc réticulable selon l'une quelconque des revendications 1 à 3,
    dans laquelle le polymère de caoutchouc (A) contient un atome d'azote.

5. Composition de caoutchouc réticulable selon la revendication 4,
    dans laquelle le polymère de caoutchouc (A) a un rapport de modification mesuré par chromatographie par perméation de gel d'adsorption sur colonne de 40 % en masse ou plus.

6. Composition de caoutchouc réticulable selon l'une quelconque des revendications 1 à 5,
    dans laquelle un indice d'iode moyen d'un composant de caoutchouc entier mesuré conformément à un procédé décrit dans la JIS K 0070:1992 est de 250 (g/100 g) ou moins.

7. Composition de caoutchouc réticulable selon l'une quelconque des revendications 1 à 6,
    dans laquelle une teneur du soufre (B) est supérieure à une teneur du générateur de radicaux (C).

8. Composition de caoutchouc réticulable selon l'une quelconque des revendications 1 à 7,
    dans laquelle « une teneur du soufre (B)/une teneur du générateur de radicaux (C) » est supérieure à 1,67.

9. Composition de caoutchouc réticulable selon l'une quelconque des revendications 2 à 8,
    dans laquelle « une teneur du générateur de radicaux (C)/une teneur de l'unité monomère aromatique de vinyle dans le polymère de caoutchouc (A) » est de 0,026 ou plus.

10. Composition de caoutchouc réticulable selon l'une quelconque des revendications 1 à 9,
    dans laquelle « (une teneur du soufre (B) + une teneur du générateur de radicaux (C)) $\times$ 0,5 » est inférieure à « une teneur de l'accélérateur de vulcanisation (D) ».

11. Composition de caoutchouc réticulable selon l'une quelconque des revendications 1 à 10, comprenant l'auxiliaire de réticulation polyfonctionnel (E).

12. Composition de caoutchouc réticulable selon l'une quelconque des revendications 1 à 11, comprenant 3 à 40 parties en masse d'une résine sur la base de 100 parties en masse d'un composant de caoutchouc contenu dans la composition de caoutchouc réticulable.

13. Composition de caoutchouc réticulable selon l'une quelconque des revendications 1 à 12, comprenant 30 à 120 parties en masse de silice sur la base de 100 parties en masse d'un composant de caoutchouc contenu dans la composition de caoutchouc réticulable.

**14.** Procédé de production d'un caoutchouc réticulé, comprenant une étape de malaxage de la composition de caoutchouc réticulable selon l'une quelconque des revendications 1 à 13.

**15.** Bande de roulement pour un pneu, comprenant la composition de caoutchouc réticulable selon l'une quelconque des revendications 1 à 13.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2003085010 A
- JP 2010270314 A
- WO 2019151126 A
- WO 2019151127 A
- WO 2019078083 A
- EP 2754674 A1
- EP 1149867 A2

- WO 2014133097 A
- WO 9605250 A
- JP 2000053706 A
- WO 2002002663 A
- WO 2015006179 A
- WO 2019171679 A
- WO 2019142501 A

**Non-patent literature cited in the description**

- **I. M. KOLTHOFF et al.** *J. Polym. Sci.,* 1946, vol. 1, 429

- **R. R. HAMPTON.** *Analytical Chemistry,* 1949, vol. 21, 923